# EUROPÄISCHE PATENTANMELDUNG

(11) **EP 4 585 435 A1**
(43) Veröffentlichungstag der Anmeldung: **16.07.2025**
(21) Anmeldenummer: 25150277.9
(22) Anmeldetag: 06.01.2025
(51) Int. Cl.: B60J 7/19, E05C 19/14

(54) **AUFSTELLDACHVERRIEGELUNG**

(30) Priorität: 10.01.2024 DE 102024100575
(71) Anmelder: EMKA Beschlagteile GmbH & Co. KG, 42551 Velbert (DE)
(72) Erfinder: Jung, Roman, 42327 Wuppertal (DE)
(74) Vertreter: Feder Walter Ebert

(57) **Zusammenfassung**

Die Erfindung betrifft eine Aufstelldachverriegelung (100) zur Verriegelung eines Aufstelldaches (200) in dessen geschlossener Position gegenüber einem Fahrzeug (300) mit einem Montageelement (30) zur Montage an dem Aufstelldach (200) oder dem Fahrzeug (30), einer mit dem Montageelement (30) gekoppelten und ein Verriegelungselement (1) aufweisen Verriegelungsbaugruppe (10) und einem Gegenverriegelungselement (20) welches von dem Verriegelungselement (1) zur Verriegelung des Aufstelldaches (200) hintergreifbar ist, wobei die Verriegelungsbaugruppe (10) über einen Hebel (40) mit dem Montageelement (30) gekoppelt ist, wobei der Hebel (40) zur Bildung eines Spannverschlusses sowohl gelenkig mit der Verriegelungsbaugruppe (10) als auch mit dem Montageelement (30) verbunden ist.

## Beschreibung

Die Erfindung betrifft eine Aufstelldachverriegelung zur Verriegelung eines Aufstelldaches in dessen geschlossener Position gegenüber einem Fahrzeug mit einem Montageelement zur Montage an dem Aufstelldach oder dem Fahrzeug, einer mit dem Montageelement gekoppelten und ein Verriegelungselement aufweisenden Verriegelungsbaugruppe und einem Gegenverriegelungselement, welches von dem Verriegelungselement zur Verriegelung des Aufstelldaches hintergreifbar ist.

Aufstelldächer sind insbesondere aus dem Bereich der Reisemobile, Campingbusse, Wohnwagen oder auch aus dem Bereich der SUVs, Geländefahrzeuge und LKWs bekannt und sorgen für eine Vergrößerung der Stehhöhe im Fahrzeug bzw. insgesamt für eine Vergrößerung des Fahrzeuginnenraums und damit beispielsweise für die Bereitstellung zusätzlicher Schlafplätze. Oftmals wird dabei das Aufstelldach über eine Schwenkachse derart mit dem Fahrzeug bzw. mit einem das Aufstelldach in der geschlossenen Position umgebenden Rahmen verbunden, dass dieses um die Schwenkachse nach oben geschwenkt werden kann, wodurch sich der Fahrzeuginnenraum vergrößern lässt. Daneben sind auch Aufstelldächer bekannt, die sich nicht verschwenken lassen, sondern die sich, beispielsweise über eine Scherenarmkonstruktion, insgesamt in vertikaler Richtung nach oben bewegen lassen und die daher auch als Hubdächer bezeichnet werden. Auch Aufstelldächer, die eine kombinierte Hub-/Schwenkbewegung ermöglichen, sind bekannt.

Aufstelldächer können in der Regel nur im Fahrzeugstillstand aufgestellt und verwendet werden, müssen jedoch vor der Fahrt zunächst eingeklappt und in die geschlossene Position verbracht werden. Damit die Aufstelldächer bei der Fahrt zuverlässig in der geschlossenen Position verbleiben und nicht aus Versehen aufspringen oder klappern, ist es bekannt, Aufstelldachverriegelungen einzusetzen, die eine Relativbewegung des Aufstelldaches gegenüber dem Fahrzeug in der geschlossenen Position verhindern. Aufstelldachverriegelungen bestehen dafür oftmals aus einer ein Verriegelungselement aufweisenden Verriegelungsbaugruppe, die über ein Montageelement, bspw. an der Innenseite des Aufstelldaches, angebracht sein kann, und ein im Dachbereich des Fahrzeugs angeordnetes Gegenverriegelungselement. Wenn das Aufstelldach geschlossen ist, kann dann das Verriegelungselement in oder hinter das Gegenverriegelungselement greifen und das Aufstelldach somit in dessen geschlossener Stellung sichern. Im einfachsten Fall kann es sich bei dem Verriegelungselement beispielsweise um einen Haken handeln, der in ein Gegenverriegelungselement nach Art einer Öse eingeschwenkt werden kann.

Eine solche zumeist konstruktiv sehr einfache Aufstelldachverriegelung hat sich in der Praxis jedoch als nachteilig erwiesen. Denn zwischen dem Aufstelldach und dem Fahrzeug sind in der Regel Zeltbahnen aus Stoff angeordnet, die beim Aufstellen des Daches gespannt werden, so dass sich ein seitlich geschlossener zusätzlicher Raum ergibt. Beim Einklappen bzw. Schlie-ßen des Aufstelldaches falten sich diese Zeltbahnen zumeist selbstständig ins Fahrzeuginnere und diese werden dann von dem Aufstelldach zusammengedrückt. Aufgrund unterschiedlicher Faltungen der Zeltbahnen beim Einklappen oder auch aufgrund von Wärmeeinflüssen kann es nun jedoch dazu kommen, dass mitunter sehr viel Kraft aufgewendet werden muss, um das Aufstelldach aus dem Fahrzeuginneren so stark nach unten zu ziehen, bis das Verriegelungselement in oder hinter das Gegenverriegelungselement geschwenkt werden kann. Auch kann zwischen dem Aufstelldach und dem Fahrzeug eine Dichtung vorgesehen, die in der geschlossenen Position von dem Aufstelldach komprimiert werden muss, um eine zuverlässige Dichtwirkung sicherzustellen. Auch zur Komprimierung der Dichtung ist es insofern erforderlich, das Aufstelldach vor der Verriegelung mit einer gewissen Kraft nach unten zu ziehen.

Die DE 10 2021 127 699 A1 offenbart eine Aufstelldachverriegelung, bei welcher das Verriegelungselement derart ausgestaltet ist, dass es das Gegenverriegelungselement in einer Fangstellung fangen und dieses bei einer Drehung nach unten in Richtung des Fahrzeugs zieht. Bei dieser Drehbewegung wird eine vergleichsweise große Kraft erzeugt, mit der das Aufstelldach auf das Fahrzeug gespannt und Zeltbahnen und/oder Dichtungen zuverlässig komprimiert werden. Als nachteilig hat sich bei dieser Vorrichtung jedoch herausgestellt, dass bei einer das Aufstelldach verriegelnden Drehbewegung des Verriegelungselements das Gegenverriegelungselement auf der gekrümmten Innenseite des Verriegelungselements abgleitet, wodurch Reibkräfte entstehen. Diese Reibkräfte können die Drehbewegung und damit die Verriegelung erschweren.

Davon ausgehend stellt sich die Erfindung die **Aufgabe** , eine Aufstelldachverriegelung anzugeben, die sich durch eine vereinfachte Verriegelung auszeichnet.

Diese Aufgabe wird bei einer Aufstelldachverriegelung der eingangs genannten Art dadurch **gelöst**, dass die Verriegelungsbaugruppe über einen Hebel mit dem Montageelement gekoppelt ist, wobei der Hebel zur Bildung eines Spannverschlusses sowohl gelenkig mit der Verriegelungsbaugruppe als auch mit dem Montageelement verbunden ist.

Durch diese Ausgestaltung wird eine erleichterte Verriegelung der Aufstelldachverriegelung bzw. des Aufstelldaches erreicht. Da die Verriegelungsbaugruppe über den zweifach gelenkig angebundenen Hebel mit dem Montageelement verbunden ist, ergibt sich ein großer Bewegungsspielraum der Verriegelungsbaugruppe und damit auch des Verriegelungselements gegenüber dem Montagelement, was die Möglichkeit einer vergleichsweise einfachen Verriegelung schafft. Dadurch findet beim Verriegeln auch nur eine geringfüge Relativbewegung zwischen dem Verriegelungselement und dem Gegenverriegelungselement statt.

Ein Spannverschluss zeichnet sich dadurch aus, dass dieser einen gewissen Anpressdruck erzeugt. Durch diesen Anpressdruck kann das Aufstelldach mit einer gewissen Spannkraft auf das Fahrzeug bzw. auf den eine Öffnung im Dachbereich des Fahrzeugs umrandenden Rahmen gedrückt bzw. gezogen werden. Durch diesen Anpressdruck kann eine Zeltbahn des Aufstelldaches und/oder auch eine Dichtung, die in der geschlossenen Position zwischen dem Aufstelldach und dem Rahmen bzw. dem Fahrzeug angeordnet ist, komprimiert werden.

Im Hinblick auf die Verriegelungsbaugruppe hat es sich als vorteilhaft herausgestellt, wenn diese zwischen einer Verriegelungsstellung und einer Entriegelungsstellung bewegbar ist. Das Aufstelldach kann in der Verriegelungsstellung gegenüber dem Fahrzeug verriegelt sein, so dass dieses dann aus der geschlossenen Position nicht in die geöffnete Position überführt werden kann. In der Entriegelungsstellung kann das Aufstelldach gegenüber dem Fahrzeug bewegbar und insofern nach oben geöffnet bzw. aufgestellt werden. Bevor das Fahrzeug bewegt werden kann, muss das Aufstelldach zunächst nach unten bewegt oder geklappt und in die geschlossene Position überführt werden. In der geschlossenen Position kann das Aufstelldach dann über die Aufstelldachverriegelung verriegelt werden, wozu die Verriegelungsbaugruppe in die Verriegelungsstellung bewegt wird. In der Verriegelungsstellung ist das Aufstelldach dann nicht mehr bewegbar.

Ferner hat es sich als vorteilhaft herausgestellt, wenn das Verriegelungselement in der das Gegenverriegelungselement hintergreifenden Stellung gegenüber dem Gegenverriegelungselement um eine Verriegelungsachse schwenkbar angeordnet ist. Das Gegenverriegelungselement kann als Schließbügel oder Schließbolzen ausgestaltet sein und von dem Verriegelungselement zur Verriegelung des Aufstelldachs hintergriffen werden. Das Gegenverriegelungselement kann fahrzeugseitig angeordnet sein, insbesondere im Dachbereich bzw. in einer im Dachbereich angeordneten Aussparung des Fahrzeugs. Das Verriegelungselement kann einen Hakenabschnitt aufweisen, mit welchem das Gegenverriegelungselement hintergriffen werden kann. Alternativ ist es auch möglich, dass das Verriegelungselement als Schließbolzen oder als Schließbügel und das Gegenverriegelungselement als Hakenabschnitt ausgestaltet ist. Maßgeblich ist insofern, dass das Verriegelungselement und das Gegenverriegelungselement in der Verriegelungsstellung insbesondere formschlüssig miteinander verriegelt sind, um das Aufstelldach zuverlässig in der geschlossenen Position zu fixieren. Das Verriegelungselement und/oder das Gegenverriegelungselement kann die Verriegelungsachse definieren. Wenn bspw. das Gegenverriegelungselement oder das Verriegelungselement als Schließbolzen oder Schließbügel ausgestaltet sind, kann die Längsachse des Schließbolzens bzw. des Schließbügels der Verriegelungsachse entsprechen. Analog kann die Mittelachse des Hakenabschnitts des Verriegelungselements die Verriegelungsachse darstellen.

Gemäß einer vorteilhaften Weiterbildung der Erfindung ist vorgesehen, dass die Verriegelungsbaugruppe um die Verriegelungsachse in die Verriegelungsstellung schwenkbar ist. Bei dieser Bewegung kann das Montageelement in Richtung des Gegenverriegelungselements bewegbar sein bzw. bewegt werden. Diese Bewegung kann aufgrund der Anlenkung des Hebels selbsttätig vonstattengehen und kann durch die Bewegung der Verriegelungsbaugruppe in die Verriegelungsstellung initiiert werden. Durch die Bewegung des Montageelements in Richtung des Gegenverriegelungselements kann das Aufstelldach nach unten gezogen und auf das Fahrzeug gepresst werden, so dass eine Spannfunktion ermöglicht wird. Dabei können Zeltbahnen und/oder eine Dichtung, die zwischen dem Aufstelldach und dem Fahrzeug angeordnet sein kann, komprimiert werden. Diese Spannbewegung kann durch die Drehbewegung bzw. durch die Hebelwirkung des Hebels erzeugt werden. Die Aufstelldachverriegelung kann somit derart ausgestaltet sein, dass das Montageelement beim Überführen der Verriegelungsbaugruppe in die Verriegelungsstellung in Richtung des Gegenverriegelungselement bewegt wird. Entsprechend kann das Aufstelldach beim Verriegeln automatisch auf das Fahrzeug bzw. den Rahmen gespannt werden. Ursächlich dafür kann die zweifach gelenkige Anlenkung des Hebels sein. Durch die Hebelwirkung kann das Aufstelldach bzw. das Montageelement mit einer geringen Kraftanstrengung auf das Fahrzeug gespannt werden.

In konstruktiver Hinsicht hat es sich als vorteilhaft herausgestellt, wenn der Hebel um eine erste Schwenkachse schwenkbar mit dem Montageelement und um eine zweite Schwenkachse schwenkbar mit der Verriegelungsbaugruppe verbunden ist. Durch diese Ausgestaltung kann mittels des Hebels beim Verriegeln auf einfache Weise eine Spannfunktion realisiert werden, die eine nach unten gerichtete Zugkraft auf das Montageelement bzw. das Aufstelldach ausübt. Die beiden Verbindungen können auf gegenüberliegenden Seiten des Hebels angeordnet sein, konkret kann der Hebel somit auf der einen Seite schwenkbeweglich mit dem Montageelement und auf der anderen Seite schwenkbeweglich mit der Verriegelungsbaugruppe verbunden sein. Der Hebel kann somit als Zwischenelement fungieren, über welches die Verriegelungsbaugruppe mit dem Montageelement verbunden sein kann. Zur Realisierung der schwenkbaren Verbindungen können jeweils Bolzenverbindungen vorgesehen sein.

In konstruktiver Hinsicht kann der Hebel einen U-förmigen Querschnitt aufweisen mit zwei parallel zueinander angeordneten Schenkeln und einem die beiden Schenkel verbindenden insbesondere plattenförmigen Verbindungsbereich. Das Montageelement kann ebenfalls zwei Schenkel aufweisen, die sich im Hinblick auf das Aufstelldach nach unten und somit im Wesentlichen in vertikaler Richtung erstrecken können. Die Schenkel des Montageelements können derart angeordnet sein, dass sich ein Schwenkbolzen durch die beiden Schenkel des Hebels und ebenfalls durch die Schenkel des Montageelements hindurcherstrecken kann, um somit eine schwenkbare Verbindung der beiden Elemente zu realisieren. Damit sich der Schwenkbolzen durch die jeweiligen Schenkel hindurcherstrecken kann, können diese Bohrungen aufweisen, deren Mittelachsen zur Durchführung des Schwenkbolzens in einer Linie liegen.

Zur Montage des Montageelements am Aufstelldach oder alternativ am Fahrzeug, kann dieses einen Montageabschnitt aufweisen. Für eine aufstelldachseitige Montage kann sich der Montageabschnitt parallel zum Aufstelldach erstrecken und von unten mit der Innenseite des Aufstelldachs verbunden, insbesondere verschraubt werden.

Wenn die Verriegelungsbaugruppe in die Verriegelungsstellung bewegt wird, kann der Hebel um die erste Schwenkachse gegenüber dem Montageelement verschwenkt werden. Da die Verriegelungsbaugruppe mit dem Hebel verbunden ist, kann dann entsprechend auch die Verriegelungsbaugruppe bei einer Bewegung in die Verriegelungsstellung zusammen mit dem Hebel um die erste Schwenkachse verschwenkt werden. Aus der Bewegung des Hebels um die erste Schwenkachse kann eine auf das Montageelement bzw. das Aufstelldach nach unten gerichtete Spannkraft erzeugt werden, mit welcher das Aufstelldach auf das Fahrzeug bzw. auf den Rahmen des Fahrzeugs gespannt werden kann.

Gemäß einer vorteilhaften Weiterbildung der Erfindung ist vorgesehen, dass die Verriegelungsbaugruppe zur Verriegelung des Aufstelldaches mit dem Montageelement verrastbar ist. Wenn die Verriegelungsbaugruppe mit dem Montageelement verrastet ist, ist das Aufstelldach verriegelt und somit nicht mehr bewegbar bzw. aufstellbar. Vorteilhaft ist die Verriegelungsbaugruppe selbsttätig mit dem Montageelement verrastbar, so dass zur Verriegelung kein zusätzlicher Handgriff erforderlich ist, sondern die Verriegelungsbaugruppe nur in die Verriegelungsstellung verschwenkt werden muss. Dafür kann die Verriegelungsbaugruppe mit einer im Wesentlichen in horizontaler Richtung auf die Verriegelungsbaugruppe aufbringbaren Druckkraft auf das Montageelement gedrückt werden. Durch diese Druckkraft kann die Verriegelungsbaugruppe dann selbsttätig mit dem Montageelement verrasten.

Weiterhin hat es sich im Hinblick auf die Verriegelungsbaugruppe als vorteilhaft herausgestellt, wenn diese zur Verrastung mit dem Montageelement einen Verriegelungsschieber aufweist. Über den Verriegelungsschieber kann eine sehr einfache Verrastung mit dem Montageelement erreicht werden. Der Verriegelungsschieber kann in vertikaler Richtung linear zwischen einer Raststellung und einer Entraststellung hin- und herbewegbar sein und vorteilhaft über eine Feder in die Raststellung vorgespannt sein. Diese Ausgestaltung ermöglicht ein selbstständiges Verrasten der Verriegelungsbaugruppe bzw. des Verriegelungsschiebers mit dem Montageelement.

Um mit dem Montageelement zu verrasten, kann das Montageelement ein Rastelement und der Verriegelungsschieber ein Gegenrastelement aufweisen. Bei dem Rastelement kann es sich um einen hakenförmigen Vorsprung handeln, der sich ausgehend von dem Montageabschnitt des Montageelements in Richtung der entriegelten Verriegelungsbaugruppe erstrecken und der um 90 Grad nach unten abgewinkelt sein kann. Das Gegenrastelement kann insbesondere auch im Hinblick auf die Federvorspannung des Verriegelungsschiebers als Rastfalle ausgestaltet sein und eine Anlaufschräge aufweisen, die dem Rastelement zugewandt sein kann. Alternativ oder zusätzlich kann auch das Rastelement eine Anlaufschräge aufweisen. Der Verriegelungsschieber bzw. das Gegenrastelement kann bei Kontakt mit dem Rastelement des Montageelements entgegen der Kraft der Feder ausweichen und dann beim Erreichen der Verriegelungsstellung das Rastelement selbsttätig hinterrasten. Diese Funktionsweise ist insofern mit der einer Türfalle, die es ermöglicht, dass eine Tür beim Schließen selbsttätig ins Schloss fällt, vergleichbar.

Gemäß einer vorteilhaften Weiterbildung der Erfindung ist vorgesehen, dass der Verriegelungsschieber zur Lösung der Rastverbindung mit dem Montageelement zumindest einen Handhabungsbereich zur manuellen Bewegung des Verriegelungsschiebers aufweist. Über den Handhabungsbereich kann der Verriegelungsschieber auf einfache Weise nach unten in die Entraststellung gezogen werden, um die Rastverbindung zu lösen. Dabei kann der Verriegelungsschieber entgegen der Kraft der Feder bewegt werden, das heißt, bei dieser Bewegung wird die Feder gespannt, so dass der Verriegelungsschieber beim Loslassen nach Art eines Schnappers wieder nach oben in die Raststellung springt. Wenn der Verriegelungsschieber in die Entraststellung bewegt wurde, kann das Rastelement das Gegenrastelement nicht mehr hintergreifen und die Verriegelungsbaugruppe kann in die Entriegelungsstellung verschwenkt werden. Dabei kann die Verriegelungsbaugruppe vom Montageelement weggeschwenkt werden. Wenn die Verriegelungsbaugruppe in die Entriegelungsstellung bewegt wurde, kann dann in einem nächsten Schritt auch die Verbindung zwischen dem Verriegelungselement und dem Gegenverriegelungselement gelöst werden, so dass das Verriegelungselement das Gegenverriegelungselement dann nicht mehr hintergreift. Das Aufstelldach ist dann nicht mehr an dem fahrzeugseitigen Gegenverriegelungselement gehalten und es kann geöffnet werden.

Die zur Entrastung des Verriegelungsschiebers bzw. zur Lösung der Rastverbindung erforderliche Bewegung des Verriegelungsschiebers in die Entraststellung kann durch ein Symbol, beispielsweise einen Pfeil, auf dem Handhabungsbereich des Verriegelungsschiebers verdeutlicht sein. Dadurch lässt sich eine intuitive Bedienung bzw. Lösung der Rastverbindung erreichen. Vorteilhaft weist der Verriegelungsschieber zwei Handhabungsbereiche auf, die gegenüberliegend zu dem Gegenrastelement angeordnet sein können, das heißt, das Gegenrastelement kann zwischen den beiden von außen zugänglichen Handhabungsbereichen angeordnet sein. Durch die beiden Handhabungsbereiche und den symmetrischen Aufbau wird sichergestellt, dass sich der Verriegelungsschieber nicht verkanten kann.

Gemäß einer vorteilhaften Weiterbildung der Erfindung wird vorgeschlagen, dass die Verriegelungsbaugruppe ein Grundelement aufweist. Der Verriegelungsschieber kann an dem Grundelement beweglich gelagert sein. Das Grundelement kann eine Führung für den Verriegelungsschieber aufweisen, so dass dieser zuverlässig in der vorstehend beschriebenen Weise in linearer Richtung hin- und herbewegt werden kann. Zur Begrenzung der Bewegung kann das Grundelement Anschläge aufweisen, so dass der Verriegelungsschieber nur zwischen diesen beiden Anschlägen hin- und herbewegt werden kann. Ein Anschlag kann somit der Raststellung und der andere Anschlag der Entraststellung zugeordnet sein. Weiterhin kann das Grundelement mindestens einen, insbesondere zwei, Dome aufweisen, die sich durch den Verriegelungsschieber hindurcherstrecken können. Der bzw. die Dome können insofern sowohl eine Führungsfunktion innehaben als auch eine Bewegung des Verriegelungsschiebers begrenzen. Der Verriegelungsschieber kann zur Aufnahme des bzw. der Dome eine korrespondierend ausgestaltete Ausnehmung bzw. korrespondierend ausgestaltete Ausnehmungen aufweisen. In der Raststellung kann der Dom bzw. können die Dome im einen Endbereich der Ausnehmung anschlagen und in der Entraststellung entsprechend im anderen Endbereich. Die Ausnehmungen können als Langlöcher ausgestaltet sein, die sich zur Führung der linearen Bewegung des Verriegelungsschiebers in vertikaler Richtung erstrecken können.

Weiterhin kann das Grundelement zwei Laschen aufweisen, die sich parallel zu den Schenkeln des Hebels erstrecken können. Über die Laschen kann das Grundelement schwenkbeweglich mit dem Hebel verbunden sein, so wie dies vorstehend im Hinblick auf die Verriegelungsbaugruppe insgesamt bereits erläutert wurde. Die Laschen können an der dem bzw. den Domen gegenüberliegenden Seite des Grundelements angeordnet sein. Zur Ermöglichung einer schwenkbaren Verbindung kann ein Schwenkbolzen vorgesehen sein, der sich durch die Laschen und durch die Schenkel des Hebels erstreckt und der somit eine schwenkbewegliche Verbindung der Verriegelungsbaugruppe bzw. des Grundelements mit dem Hebel ermöglicht. Die Laschen und der Hebel bzw. die Schenkel können zur Verbindung über den Schwenkbolzen entsprechende Bohrungen aufweisen, wobei die Mittelachsen der Bohrungen in einer Linie angeordnet sein können. Das Grundelement bzw. die Verriegelungsbaugruppe kann somit um eine Schwenkachse um den Hebel verschwenkt werden. Diese Schwenkachse kann parallel zu der ersten Schwenkachse in horizontaler Richtung verlaufen. Insofern können auch die beiden Schwenkbolzen parallel zueinander angeordnet sein. Der Hebel kann in einem Endbereich schwenkbeweglich mit dem Montageelement und in dem anderen Endbereich schwenkbeweglich mit der Verriegelungsbaugruppe bzw. mit dem Grundelement verbunden sein. Vorteilhaft ist der Hebel im oberen Endbereich mit der Verriegelungsbaugruppe und im unteren Bereich mit dem Montageelement schwenkbar verbunden. Die erste Schwenkachse kann dann in der Verriegelungsstellung unterhalb der zweiten Schwenkachse angeordnet sein bzw. kann der den Hebel und das Montageelement miteinander verbindende Schwenkbolzen in der Verriegelungsstellung unterhalb des die Verriegelungsbaugruppe mit dem Hebel verbindenden Schwenkbolzen angeordnet sein.

Weiterhin hat es sich als vorteilhaft herausgestellt, wenn der Hebel in der Verriegelungsstellung in einer Übertotpunktstellung angeordnet ist. Durch diese Übertotpunktstellung wird verhindert, dass sich das Aufstelldach in unbeabsichtigter Weise öffnet, selbst wenn die Verriegelungsbaugruppe nicht richtig mit dem Montageelement verrastet ist. Denn um die Verriegelungsbaugruppe aus der Verriegelungsstellung in die Entriegelungsstellung zu bewegen, muss das Montageelement ein Stück in Richtung des Gegenverriegelungselements bewegt werden. Da dabei die Zeltbahnen des Aufstelldachs und/oder die Dichtung komprimiert werden muss, ist für diese Bewegung eine gewisse Kraft erforderlich. Diese Kraft ist insbesondere so bemessen, dass das Verriegelungselement nicht von selbst, bspw. aufgrund von Fahrzeugbewegungen, in unbeabsichtigter Weise in die Entriegelungsstellung überführt wird. In der Übertotpunktstellung kann der Hebel gegenüber einer Vertikalen derart verkippt sein, dass die zweite Schwenkachse bzw. der obere Schwenkbolzen bei einer Entriegelung durch die Vertikale hindurchbewegt wird. In der Verriegelungsstellung kann die zweite Schwenkachse im Hinblick auf eine durch die ersten Schwenkachse verlaufende Vertikale auf der einen Seite der ersten Schwenkachse und in der Verriegelungsstellung kann die zweite Schwenkachse auf der anderen Seite liegen.

Gemäß einer weiteren vorteilhaften Ausgestaltung der Erfindung ist vorgesehen, dass das Verriegelungselement zur Einstellung der Verriegelungsposition des Aufstelldachs bewegbar angeordnet ist. Dieses Merkmal kann mit den vorstehend beschriebenen Merkmalen kombiniert werden. Dies umfasst auch eine Kombination einzig mit den Merkmalen der eingangs genannten Aufstelldachverriegelung. Auch diese Aufstelldachverriegelung löst die eingangs genannte Aufgabe. Denn durch die Bewegbarkeit des Verriegelungselements kann der Anpressdruck des Aufstelldachs auf das Fahrzeug bzw. den Rahmen und damit auch die Komprimierung der Zeltbahnen und/oder der Dichtung eingestellt werden, was den Verriegelungsvorgang und auch den Montagevorgang der Aufstelldachverriegelung insgesamt vereinfacht. Insofern lassen sich auch Fertigungs- oder Montagetoleranzen ausgleichen sowie dieselbe Aufstelldachverriegelung auch für verschiedene Aufstelldächer und/oder Fahrzeuge verwenden. Vorteilhaft ist das Verriegelungselement zur Einstellung in horizontaler Richtung bewegbar, so dass entsprechend auch das Aufstelldach in seiner verriegelten Position in gewissem Maße in horizontaler Richtung leicht unterschiedlich angeordnet sein kann. Aus diesem leicht unterschiedlichen Positionen können dann auch unterschiedliche Anpressdrücke resultieren. Das Verriegelungselement kann bewegbar am Grundelement gelagert bzw. gegenüber dem Grundelement bewegbar angeordnet sein. Insofern muss die Verriegelungsposition der Verriegelungsbaugruppe bzw. des Grundelements nicht geändert werden, sondern die Einstellbarkeit des Verriegelungselements ist vielmehr unabhängig von der Verriegelung der Verriegelungsbaugruppe.

In konstruktiver Hinsicht kann das Grundelement eine Führung aufweisen, über welche das Verriegelungselement in linearer Richtung bewegbar sein kann. Das Verriegelungselement kann einen Führungsabschnitt aufweisen, der oberhalb des Hakenabschnitts einstückig mit diesem verbunden ist und der in der entsprechenden Führung des Grundelements geführt sein kann. Die Führung kann für eine zuverlässige Einstellbewegung des Verriegelungselements sorgen. Insbesondere können durch die Einstellbarkeit auch leicht unterschiedliche Montagepositionen des Gegenverriegelungselements ausgeglichen werden, was sich auch im Hinblick auf die Montage als vorteilhaft herausgestellt hat.

Im Hinblick auf die Bewegung des Verriegelungselements hat es sich weiterhin als vorteilhaft herausgestellt, wenn eine Einstellvorrichtung zur insbesondere manuellen Bewegung des Elements vorgesehen ist. Über die Einstellvorrichtung kann das Verriegelungselement in der vorstehend beschriebenen Art und Weise bewegt und darüber auch die Verriegelungsposition des Aufstelldachs sehr genau eingestellt werden. Eine manuelle Einstellbarkeit zeichnet sich besonders durch einen einfachen konstruktiven Aufbau und dadurch aus, dass keine zusätzliche Energiequelle erforderlich ist. Vorteilhaft ermöglicht die Einstellvorrichtung eine stufenlose Einstellung des Verriegelungselements. Die maximale Verstellbarkeit bzw. der maximale Hub des Verriegelungselements kann im Bereich von 15 mm liegen. Dies hat sich in der Praxis als ausreichend herausgestellt. In konstruktiver Hinsicht kann die Einstellvorrichtung als Einstellschraube ausgestaltet sein oder eine Einstellschraube aufweisen. Die Einstellschraube kann bei einer manuellen Drehbewegung eine lineare Bewegung des Verriegelungselements bewirken. Das Verriegelungselement kann dafür eine Bohrung mit einem Gewinde aufweisen und das Gewinde der Schraube kann mit dem Innengewinde der Bohrung kämmen. Eine Drehbewegung der Einstellschraube kann dann zu einer linearen Bewegung des Verriegelungselements, also je nach Drehrichtung eine Hoch- oder eine Runterbewegung, bewirken.

Weiterhin hat es sich im Hinblick auf die Einstellvorrichtung als vorteilhaft herausgestellt, wenn diese gegenüber dem Grundelement axialfixiert ist. Durch diese Axialfixierung kann die Einstellvorrichtung zwar gedreht, jedoch nicht axial, d.h. in Richtung ihrer Längsachse, bewegbar sein. Beim Drehen kann sich insofern das Verriegelungselement in linearer bzw. in axialer Richtung gegenüber der Einstellvorrichtung hoch und runter bewegen. Die Einstellvorrichtung kann einen Schraubenkopf und einen bolzenförmigen Schaftabschnitt mit einem Gewinde aufweisen, wobei die Einstellvorrichtung um die Längsachse des Schaftabschnitts drehbar gelagert sein kann. Das Grundelement kann eine Ausnehmung, insbesondere eine schlitzförmige Ausnehmung, aufweisen, durch die sich der Schraubenkopf in radialer Richtung zumindest abschnittsweise hindurcherstrecken kann. Der sich durch die Ausnehmung hindurcherstreckende Teil des Schraubenkopfes kann nach außen hervorragen und per Hand manuell gedreht werden, um dadurch das Verriegelungselement hoch und runter zu bewegen. Die Ausnehmung des Grundelements kann dabei auch als Axialfixierung für die Einstellvorrichtung bzw. den Schraubenkopf fungieren und entsprechend eine axiale Bewegung relativ zu dem Grundelement verhindern. Vorteilhaft ist der Schraubenkopf umfangsseitig gerändelt, um insofern die Einstellung auf manuelle Weise zu vereinfachen.

In konstruktiver Hinsicht hat es sich als vorteilhaft herausgestellt, wenn die Einstellvorrichtung unterhalb des Verriegelungsschiebers angeordnet ist, so dass der Verriegelungsschieber die Einstellvorrichtung nicht behindert. Weiterhin ist es vorteilhaft, wenn die Einstellvorrichtung nur von der dem Montageelement zugewandten Seite des Grundelements erreichbar ist, so dass der Schraubenkopf bzw. der hervorragende Abschnitt von außen nicht ohne Weiteres zu erkennen ist. Ferner kann somit vorgesehen sein, dass die Einstellung bzw. die lineare Bewegung des Verriegelungselements nur dann vorgenommen werden kann, wenn die Verriegelungsbaugruppe nicht mit dem Montageelement verrastet und die Aufstelldachverriegelung insofern entriegelt ist. Im verriegelten Zustand kann der Hebel den in radialer Richtung gegenüber dem Grundelement vorstehenden Teil der Einstellvorrichtung bzw. des Schraubenkopfes verdecken.

Gemäß einer vorteilhaften Weiterbildung der Erfindung ist ein Sicherungselement, insbesondere eine Sicherungsplatte, vorgesehen, über welche der Verriegelungsschieber an dem Grundelement gesichert ist. Der Verriegelungsschieber kann zwischen dem Grundelement und dem Sicherungselement angeordnet sein und somit translatorisch nur in einer Richtung bewegbar sein. Das Sicherungselement kann mit dem bzw. den Domen des Grundelements verbunden und insofern einen vordefinierten Abstand gegenüber dem Grundelement aufweisen. Der Verriegelungsschieber kann entsprechend in diesem Zwischenraum zwischen dem Grundelement und dem Sicherungselement angeordnet sein. Ferner kann das Sicherungselement auch das Verriegelungselement gegenüber dem Grundelement sichern, so dass auch dieses nur in einer Richtung translatorisch bewegbar sein kann. Auch das Verriegelungselement kann somit zwischen dem Grundelement und dem Sicherungselement angeordnet sein. Durch das Sicherungselement lassen sich somit auf konstruktiv einfache Weise sowohl der Verriegelungsschieber als auch das Verriegelungselement am Grundelement sichern.

Durch die plattenförmige Geometrie des Sicherungselements kann der durch das Sicherungselement erforderliche Bauraum möglichst geringgehalten werden, was sich in einer vergleichsweise dünnen Verriegelungsbaugruppe widerspiegelt. Das Sicherungselement kann eine Ausnehmung aufweisen, durch die sich die Einstellvorrichtung bzw. der Schraubenkopf der Einstellvorrichtung abschnittsweise hindurcherstrecken kann. Diese Ausnehmung kann von schlitzförmiger Geometrie sein und sich parallel zu der Ausnehmung des Grundelements erstrecken, so dass der Schraubenkopf in den beiden Ausnehmungen in axialer Richtung gesichert ist. Um das Sicherungselement mit dem Grundelement zu verbinden, kann dieses, insbesondere an drei Stellen, mit dem Grundelement, insbesondere mit sich in horizontaler Richtung erstreckenden Domen des Grundelements, verbunden, insbesondere vertaumelt, sein.

Es hat sich weiterhin als vorteilhaft herausgestellt, wenn das Verriegelungselement über eine Fixiervorrichtung fixierbar ist. Es kann somit vorgesehen sein, dass das Verriegelungselement über die Einstellvorrichtung zunächst in der Höhe eingestellt werden kann und in einem nächsten Schritt kann das Verriegelungselement bzw. die eingestellte Position des Verriegelungselements über die Fixiervorrichtung fixiert werden. Wenn das Verriegelungselement entsprechend fixiert ist, kann das Verriegelungselement nicht mehr über die Einstellvorrichtung bewegbar sein.

Im Hinblick auf die Fixiervorrichtung hat es sich als vorteilhaft herausgestellt, wenn diese durch einen Fixierungsabschnitt des Sicherungselements gebildet wird, der zur Fixierung des Verriegelungselements gegen das Verriegelungselement spannbar ist. Das Verriegelungselement, insbesondere der Führungsabschnitt des Verriegelungselements, kann eine Spannfläche aufweisen, gegen welche der Fixierungsabschnitt gedrückt bzw. gespannt werden kann. Durch die zwischen dem Fixierungsabschnitt und dem Verriegelungselement wirkende Reibkraft kann somit eine reibschlüssige Verbindung erzeugt werden, die eine lineare Bewegung des Verriegelungselements verhindert. Da das Verriegelungselement in der vorstehend beschriebenen Weise mit der Einstellvorrichtung gekoppelt ist, kann insofern durch diesen Reibschluss auch eine Bewegung der Einstellvorrichtung, insbesondere eine Drehbewegung des Schraubenkopfes, verhindert werden. Um das Verriegelungselement mittels des Fixierungsabschnitts entsprechend zu fixieren, kann die Fixiervorrichtung eine Fixierschraube aufweisen, über welche der Fixierungsabschnitt gegen das Verriegelungselement gespannt werden kann. Die Fixierschraube kann sich durch das Grundelement erstrecken und in den Fixierungsabschnitt des Sicherungselements eingeschraubt sein. Wenn die Fixierschraube bewegt wird, kann dies zu einer elastischen Verformung des Fixierungsabschnitts führen, so dass dieser dann in Richtung des Grundelements verformt und gegen das Verriegelungselement gespannt wird, um dieses zuverlässig an einer Bewegung zu hindern. Die Fixierschraube kann analog zu der Einstellvorrichtung von der dem Hebel zugewandten Seite des Grundelements erreichbar sein.

Im Hinblick auf den Fixierungsabschnitt hat es sich weiterhin als vorteilhaft herausgestellt, wenn dieser zur Spannung gegen das Verriegelungselement elastisch verformbar ist. Der Fixierungsabschnitt kann sich elastisch verformen, wenn dieser über die Fixierschraube gegen das Verriegelungselement gespannt wird. Durch die elastische Verformung kann dieser Vorgang reversibel sein, so dass durch eine Lösung der Schraube dann auch eine Einstellung des Verriegelungselements über die Einstellvorrichtung wieder ermöglicht ist. In konstruktiver Hinsicht kann das Sicherungselement geschlitzt bzw. mit einem Schlitz versehen sein, der sich insbesondere in horizontaler Richtung parallel zu der Ausnehmung für das Sicherungselement erstrecken kann. Vorteilhaft ist der Schlitz als einseitig offener Schlitz ausgestaltet.

Der Abschnitt auf der einen Seite des Schlitzes kann den Fixierungsabschnitt bilden und der andere Abschnitt kann einen Grundabschnitt bilden. Der Grundabschnitt kann mit dem Grundelement verbunden sein und sich bei einer Bewegung der Fixierschraube nicht bewegen bzw. nicht verformt werden. Der Grundabschnitt kann oberhalb des Schlitzes und der Fixierungsabschnitt kann unterhalb des Schlitzes angeordnet sein. Durch eine Drehung der Fixierschraube kann der Fixierungsabschnitt elastisch gegenüber dem Grundabschnitt bewegbar sein. Der Schlitz kann dabei für eine elastische Verformung in einer Richtung sorgen. Der Fixierungsabschnitt kann sich in horizontaler Richtung erstrecken und um eine vertikale Achse elastisch verformt werden. Der Fixierungsabschnitt kann eine ein Innengewinde aufweisende Bohrung für die Fixierschraube aufweisen, wobei diese Bohrung unterhalb des offenen Schlitzendes angeordnet sein kann, so dass durch diese Fixierschraube ein vergleichsweise großer Hebelarm entsteht, der eine elastische Bewegung des Fixierungsabschnitts auf einfache Weise erlaubt.

Gemäß einer weiteren vorteilhaften Ausgestaltung der Erfindung ist vorgesehen, dass die Aufstelldachverriegelung einen Verriegelungsindikator zur Anzeige des Verriegelungsstatus der Aufstelldachverriegelung aufweist. Dieses Merkmal kann mit den vorstehend beschriebenen Merkmalen kombiniert werden. Dies umfasst auch eine Kombination einzig mit den Merkmalen der eingangs genannten Aufstelldachverriegelung. Auch diese Aufstelldachverriegelung löst die eingangs genannte Aufgabe. Denn über den Verriegelungsindikator kann auf einfache Weise erkannt werden, ob die Verriegelungsbaugruppe sich in der Entriegelungsstellung oder in der Verriegelungsstellung befindet. Insofern können Fehler bei der Verriegelung unterbunden werden, insbesondere kann verhindert werden, dass eine die Aufstelldachverriegelung betätigende Person davon ausgeht, dass die Aufstelldachverriegelung zuverlässig verriegelt und sich die Verriegelungsbaugruppe entsprechend in der Verriegelungsstellung befindet, dies jedoch nicht der Fall ist. Es könnte dahingehend bspw. passieren, dass die Verriegelungsbaugruppe zwar in Richtung der Verriegelungsstellung bewegt und man von außen davon ausgehen könnte, dass die Verriegelungsstellung bereits erreicht ist, jedoch der Verriegelungsschieber das Montageelement noch nicht zuverlässig hinterrastet hat. Solche falsch-positiven Verriegelungen lassen sich über den Verriegelungsindikator erkennen. Der Verriegelungsindikator kann zwischen einer Verriegelungsindikatorstellung und einer Entriegelungsindikatorstellung bewegbar sein, wobei der Verriegelungsindikator in der Verriegelungsindikatorstellung eine Verriegelung und in der Entriegelungsindikatorstellung eine Entriegelung der Aufstelldachverriegelung anzeigen kann.

In konstruktiver Hinsicht kann der Verriegelungsindikator als linearbeweglicher Schieber ausgestaltet sein, der in dem Sicherungselement geführt sein kann. Das Sicherungselement kann für den Verriegelungsindikator eine Linearführung aufweisen, die sich in vertikaler Richtung erstrecken kann. Ferner kann eine Abdeckung vorgesehen sein, die insbesondere mit dem Grundelement verbunden ist und die das Sicherungselement, die Einstellvorrichtung und den Verriegelungsschieber abdeckt, so dass diese Elemente von außen nicht erkennbar sind. Die Abdeckung kann jedoch eine Sichtöffnung aufweisen, durch welche der Status des Verriegelungsindikators erkennbar sein kann. Der Verriegelungsindikator kann eine erste Indikatorfläche und eine zweite Indikatorfläche aufweisen, wobei der Verriegelungsindikator derart zwischen der Entriegelungsindikatorstellung und der Verriegelungsindikatorstellung bewegbar ist, dass in der Entriegelungsindikatorstellung die erste Indikatorfläche und in der Verriegelungsindikatorstellung die zweite Indikatorfläche durch die Sichtöffnung der Abdeckung zu erkennen ist. Die erste Indikatorfläche kann mit einem die Verriegelungsstellung symbolisierenden Symbol und die zweite Indikatorfläche mit einem die Entriegelungsstellung symbolisierenden Symbol versehen sein. Somit kann der Verriegelungsstatus der Aufstelldachverriegelung bzw. des Verriegelungsschiebers über den Verriegelungsindikator von außen auf einfache Weise erkannt werden. Die Sichtöffnung kann die Größe einer Indikatorfläche aufweisen, so dass immer nur die dem aktuellen Status entsprechende Indikatorfläche zu sehen und die andere Indikatorfläche verdeckt ist.

Weiterhin hat es sich als vorteilhaft herausgestellt, wenn der Verriegelungsindikator in die Entriegelungsindikationsstellung vorgespannt ist und das Rastelement des Montageabschnitts den Verriegelungsindikator bei der Überführung der Verriegelungsbaugruppe in die Verriegelungsstellung in die Verriegelungsindikationsstellung überführt. Das Rastelement kann den Verriegelungsindikator insofern beim Einklappen der Verriegelungsbaugruppe nach unten drücken, wenn der Verriegelungsschieber das Montageelement bzw. das Rastelement des Verriegelungsindikators hinterrastet hat. Dadurch kann dann die erste Indikatorfläche durch die Sichtöffnung der Abdeckung sichtbar werden, wodurch angezeigt wird, dass eine zuverlässige Verriegelung stattgefunden hat. Der Verriegelungsindikator kann am oberen Ende eine Anlaufschräge aufweisen, so dass dieser bei einem Kontakt mit dem Rastelement selbsttätig nach unten in die Verriegelungsindikatorstellung gedrückt wird. Aufgrund der Feder kann der Verriegelungsindikator dabei in die Entriegelungsindikationsstellung vorgespannt werden.

Im Hinblick auf die Anordnung der Feder hat es sich als vorteilhaft herausgestellt, wenn diese als Spiralschenkelfeder ausgestaltet ist und in einem Montageabschnitt des Sicherungselements gelagert ist. Der Verriegelungsindikator kann somit über die Feder gegenüber dem Sicherungselement vorgespannt sein. Der Montageabschnitt kann an einem Ende der Ausnehmung des Sicherungselements angeordnet sein.

Weiterhin hat es sich im Hinblick auf den Verriegelungsindikator als vorteilhaft herausgestellt, wenn dieser eine insbesondere als Mitnahmekontur ausgestaltete Kontur aufweist. Über die Kontur kann der Verriegelungsindikator mit dem Entriegelungsschieber gekoppelt sein, insbesondere kann sich die Kontur in den Entriegelungsschieber hineinerstrecken. Der Verriegelungsindikator kann durch den Verriegelungsschieber bei einer Bewegung der Verriegelungsbaugruppe in die Verriegelungsstellung in die Verriegelungsindikatorstellung gedrückt werden, insbesondere nach unten und entgegen der Kraft der Feder. Der Verriegelungsindikator muss insofern nicht selbst gegen das Rastelement des Montageelement laufen, und von diesem nach unten gedrückt werden. Der Verriegelungsindikator kann durch den Verriegelungsschieber vielmehr entgegen der Kraft der Feder in die Verriegelungsindikationsstellung bewegt werden, wenn der Verriegelungsschieber aufgrund eines Kontaktes mit dem Rastelement selbsttätig in die Entraststellung überführt wird. Wenn der Verriegelungsschieber dann durch die Feder in die Raststellung überführt wird und das Rastelement hintergreift, wird der Verriegelungsindikator zur Indikation der Hinterrastung und einer Verriegelung der Aufstelldachverriegelung durch das Rastelement in der Verriegelungsindikationsstellung gehalten. In der Raststellung kann das Rastelement den Verriegelungsindikator in der Verriegelungsindikationsstellung halten. Der Verriegelungsindikator kann dann erst bei einer Bewegung der Verriegelungsbaugruppe in die Entriegelungsstellung zusammen mit dem Entriegelungsschieber zurück in die Entriegelungsindikationsstellung überführt werden. Der Verriegelungsindikator kann somit nur in einer Richtung von dem Entriegelungsstellung mitgenommen werden, nämlich in die Verriegelungsindikationsstellung.

Weiterhin wird im Hinblick auf die eingangs genannte Aufgabe ein Fahrzeug mit einem Aufstelldach und mindestens einer Aufstelldachverriegelung vorgeschlagen, wobei die Aufstelldachverriegelung in der vorstehend beschriebenen Art und Weise ausgestaltet ist. Das Aufstelldach kann ebenfalls in der vorstehend beschriebenen Weise ausgestaltet sein. Ferner wird vorgeschlagen, dass entweder das Verriegelungselement oder das Gegenverriegelungselement aufstelldachseitig angeordnet ist. In der Praxis hat es sich beispielsweise als vorteilhaft erwiesen, wenn das Verriegelungselement aufstelldachseitig und das Gegenverriegelungselement entsprechend fahrzeugseitig angeordnet ist. Das Gegenverriegelungselement kann dabei im oberen Bereich des Fahrzeugs bzw. an einem Rahmen angeordnet sein und sich in horizontaler Richtung erstrecken. Das aufstelldachseitige Verriegelungselement kann über das Montageelement an der Unterseite des Aufstelldachs montiert und dann zusammen mit dem Aufstelldach bewegbar sein. Es kann eine Dichtung zwischen dem Fahrzeug bzw. dem Rahmen des Fahrzeugs und dem Aufstelldach angeordnet sein, die Dichtung kann in der Verriegelungsstellung von dem Aufstelldach komprimiert werden, so dass eine zuverlässige Abdichtung gewährleistet ist. Wenngleich vorstehend in erster Linie auf eine aufstelldachseitige Anordnung des Verriegelungselements Bezug genommen wurde, kann die Anordnung jedoch auch umgekehrt sein, das heißt, das Verriegelungselement kann fahrzeugseitig und das Gegenverriegelungselement aufstelldachseitig montiert sein. Dafür kann das Montageelement an dem Fahrzeug bzw. an den Rahmen angeordnet sein. Das Aufstelldach kann in der offenen bzw. aufgestellten Position den Fahrzeuginnenraum, insbesondere nach oben, vergrößern. Vorteilhaft kann das Aufstelldach in der offenen bzw. aufgestellten Position einen Schlafplatz auf der Oberseite des Fahrzeugdachs bereitstellen. Dieser Schlafplatz ist dann zwischen der Oberseite des Fahrzeugdachs und dem Aufstelldach angeordnet. Der Schlafplatz kann aus dem Inneren des Fahrzeugs durch eine Öffnung im Fahrzeugdach erreichbar sein.

Weitere Einzelheiten und Vorteile der Erfindung sollen nachfolgend anhand der beigefügten Zeichnungen näher erläutert werden. Darin zeigen:
- Fig. 1: eine schematische Explosionsansicht der Aufstelldachverriegelung;
- Fig. 2a - 2c: perspektivische Seitenansichten der Aufstelldachverriegelung in der Entriegelungsstellung;
- Fig. 3: eine perspektivische Seitenansicht der Aufstelldachverriegelung mit entfernter Abdeckung;
- Fig. 4a - 4d: Schnittansichten der Aufstelldachverriegelung in verschiedenen Stellungen;
- Fig. 5a - 5b: perspektivische Seitenansichten eines Fahrzeugs mit einem Aufstelldach.

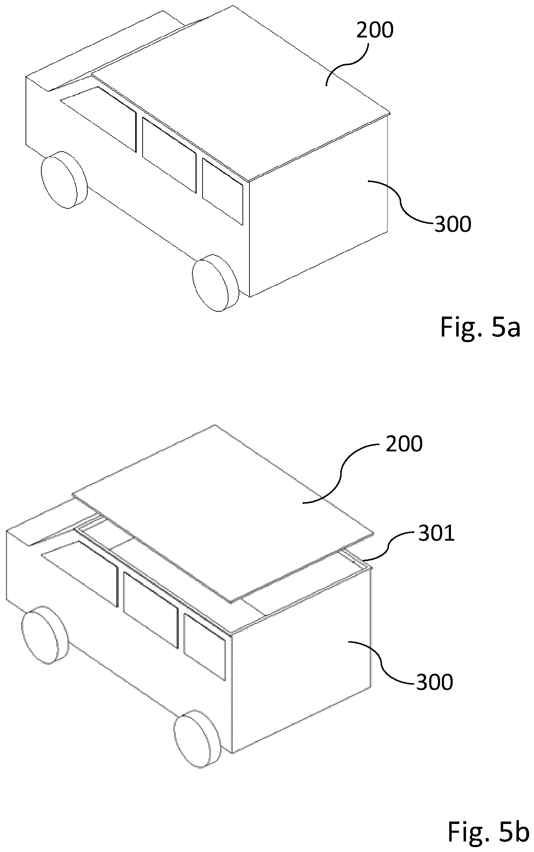

In den schematischen Darstellungen der Fig. 5a und 5b ist ein Fahrzeug 300 in Form eines Campervans mit einem Aufstelldach 200 in einer perspektivischen Seitenansicht gezeigt. Das Aufstelldach 200 befindet sich gemäß der Darstellung in der Fig. 5a in dessen geschlossener Position, so dass es flach auf dem Fahrzeug 300 aufliegt und im Grunde kaum zu erkennen ist. Das Fahrzeug 300 weist im Dachbereich einen das Aufstelldach 200 umgebenden Rahmen 301 auf, der in der Fig. 5b zu erkennen ist und an dem das Aufstelldach 200 über eine nicht mit dargestellte Aufstell- und Feststellmechanik gelagert ist.

Um den Platz im Fahrzeuginnenraum zu vergrößern, kann das Aufstelldach 200 über eine Hubbewegung vom Fahrzeug 300 abgehoben und geöffnet werden, so dass dadurch der Fahrzeuginnenraum nach oben hin vergrößert wird. Zwischen der Oberseite des Fahrzeugs 300 und dem Aufstelldach 200 wird dann ein zusätzlicher Platz geschaffen, der bspw. als Schlafplatz verwendet werden kann. Zur Öffnung bzw. zum Aufstellen des Aufstelldachs 200 kann aus dem Inneren des Fahrzeugs 300 von unten gegen das Aufstelldach 200 gedrückt und dieses insofern aufgestellt werden. Die geöffnete oder aufgestellte Position ist in der Fig. 5b zu erkennen. Nicht mit dargestellt sind dabei Zeltplanen, die zwischen dem Aufstelldach 200 und dem Rahmen 301 bzw. dem Fahrzeug 300 angeordnet sind und die den durch das Aufstelldach 200 zusätzlich geschaffenen Innenraum seitlich verschließen.

Wie man sich anhand der Fig. 5b leicht vorstellen kann, ist es nur möglich, das Aufstelldach 200 im Stillstand des Fahrzeugs 300 aufzustellen und zu verwenden. Bevor das Fahrzeug 300 daher bewegt werden kann, muss das Aufstelldach 200 zunächst wieder aus der angehobenen bzw. geöffneten Position in eine geschlossene Position verbracht und dann in dieser gesichert bzw. verriegelt werden. Eine Verriegelung des Aufstelldaches 200 ist erforderlich, damit sich dieses bei der Fahrt nicht unbeabsichtigt öffnet oder es zu unerwünschten Vibrationen oder Klappergeräuschen kommt.

Um das Aufstelldach 200 in dessen geschlossener Position entsprechend zu verriegeln, ist eine Aufstelldachverriegelung 100 vorgesehen, die in den übrigen Figuren dargestellt ist und deren Aufbau und Funktion nachfolgend noch näher beschrieben wird. Mit der Aufstelldachverriegelung 100 kann sichergestellt werden, dass das Aufstelldach 200 in dessen geschlossener Position verriegelt und sich dann in dieser Stellung nicht mehr gegenüber dem Fahrzeug 300 bzw. dem Rahmen 301 bewegen lässt. Zudem lässt sich mit der Aufstelldachverriegelung 100 das Aufstelldach 200 mit einer gewissen Kraft nach unten ziehen und insofern auf das Fahrzeug 300 bzw. den Rahmen 301 aufspannen, wobei die Zeltbahnen und eine etwaige zwischen dem Aufstelldach 200 und dem Fahrzeug 300 angeordnete Dichtung komprimiert wird.

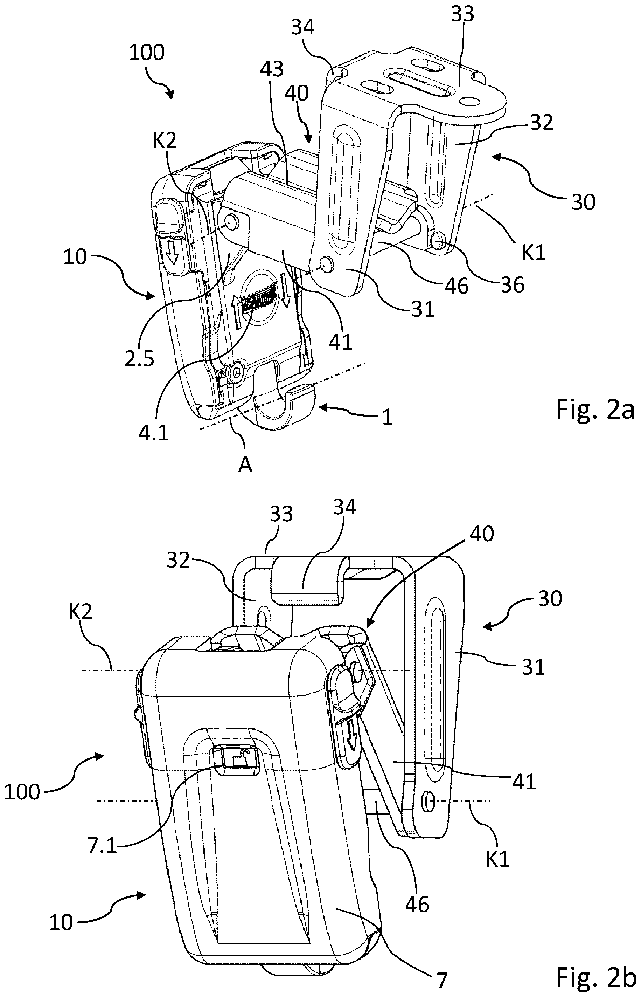

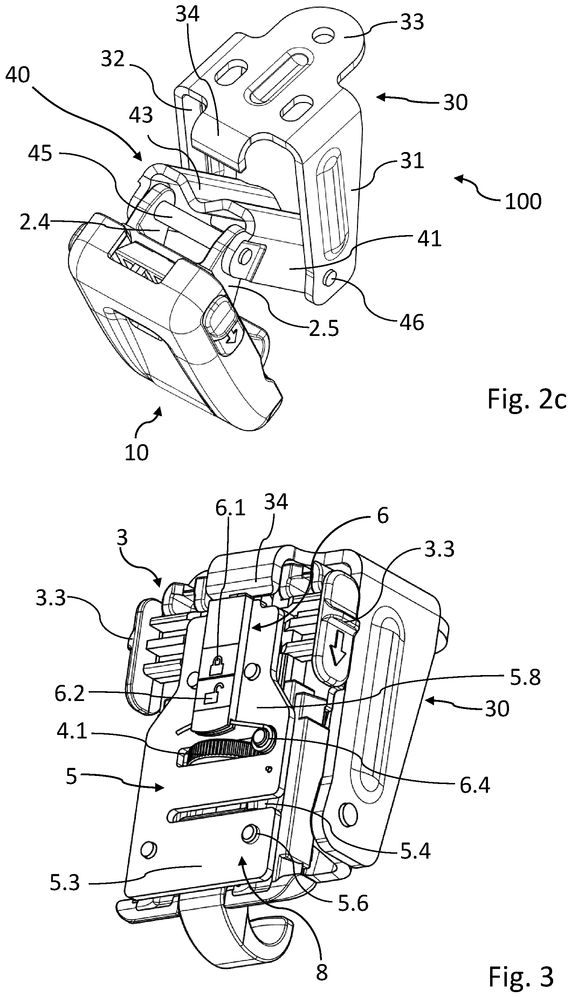

Die Darstellung der Fig. 2a bis 2c zeigen nun die Aufstelldachverriegelung 100 jeweils in perspektivischen Seitenansichten. Die Aufstelldachverriegelung 100 besteht im Wesentlichen aus drei Elementen, nämlich einem Montageelement 30, einer Verriegelungsbaugruppe 10 sowie einem zwischen dem Montageelement 30 und der Verriegelungsbaugruppe 10 angeordneten Hebel 40, der sowohl mit dem Montageelement 30 als auch mit der Verriegelungsbaugruppe 10 gelenkig verbunden ist.

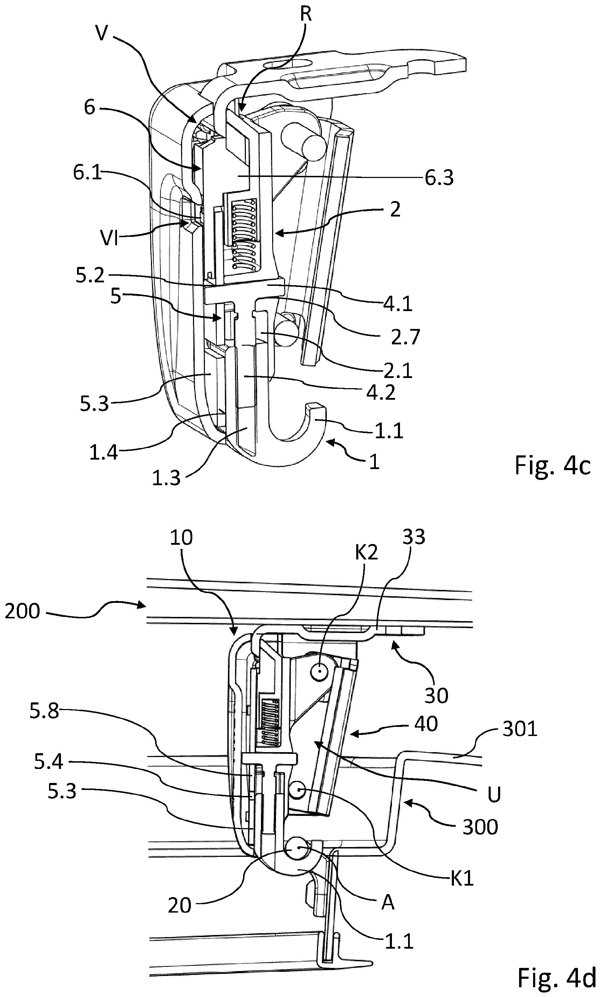

Das Montageelement 30 weist zunächst einen plattenförmigen Montageabschnitt 33 auf, über den das Montageelement 30 mit dem Aufstelldach 200 verschraubt werden kann. In der Darstellung der Fig. 4d ist das über den Montageabschnitt 33 an der Innenseite des Aufstelldaches 200 montierte Montageelement 30 zu erkennen. Der Montageabschnitt 33 liegt dabei flächig auf der Innenseite des Aufstelldachs 200 auf und ist über mehrere Schrauben mit diesem verbunden. In dem der Verriegelungsbaugruppe 10 zugewandten Ende ist der Montageabschnitt 33 hakenförmig nach unten abgewinkelt. Bei diesem abgewinkelten Abschnitt handelt es sich um ein Rastelement 34 über welches die Verriegelungsbaugruppe 10 mit dem Montageelement 30 verrastet werden kann, was nachfolgend noch nähergehend erläutert werden wird.

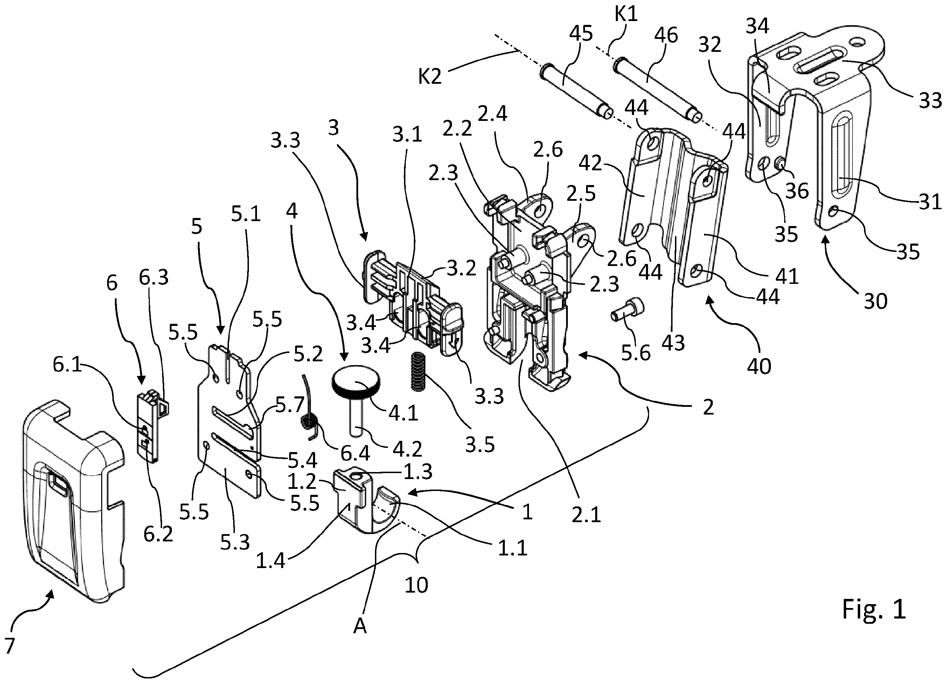

Senkrecht zu dem horizontal ausgerichteten Montageabschnitt 33 erstrecken sich in vertikaler Richtung zwei plattenförmige Schenkel 31, 32, die im unteren Bereich jeweils mit einer Bohrung 35 versehen sind, so wie dies in der Explosionsansicht der Fig. 1 zu erkennen ist. Durch diese beiden konzentrisch zueinander angeordneten Bohrungen 35 erstreckt sich ein Schwenkbolzen 46, der eine schwenkbare Verbindung des Hebels 40 mit dem Montageelement 30 um die Schwenkachse K1 ermöglicht. Die Schwenkachse K1 entspricht dabei der Längsachse des Schwenkbolzens 46.

So wie dies anhand der Darstellungen der Fig. 2a bis 2c ersichtlich ist, weist der Hebel 40 einen im Wesentlichen U-förmigen Querschnitt auf, bestehend aus einem mittleren Verbindungsbereich 43 und zwei einstückig mit dem Verbindungsbereich verbundenen Schenkel 41, 42. Der Abstand der beiden Schenkel 41, 42 ist dabei etwas schmaler als der Abstand der Schenkel 31, 32 des Montageelements 30, so dass der Hebel 40 zwischen die beiden Schenkel 31, 32 des Montageelements 30 passt. Auch die Schenkel 41, 42 des Hebels 40 weisen jeweils eine Bohrung 44 auf, die in einer Flucht mit den beiden Bohrungen 35 des Montageelements liegen, so dass sich der Schwenkbolzen 46 auch durch die beiden Bohrungen 44 des Hebels 40 erstrecken kann. Über den Schwenkbolzen 46 ist somit der Hebel 40 gelenkig mit dem Montageelement 30 verbunden.

So wie dies anhand der Darstellung der Fig. 2a zu erkennen ist, weist zumindest einer der beiden Schenkel 31, 32 am unteren Ende einen in horizontaler Richtung nach innen vorspringenden Anschlag 36 auf, der eine Bewegung des Hebels 40 begrenzt. Der Hebel 40 kann insofern nur in etwa um einen Winkel von 90 Grad gegenüber dem Montageelement 30 nach unten geschwenkt werden, bis der Schenkel 41, 42 an dem jeweiligen Anschlag 36 anliegt und eine weitergehende Bewegung verhindert wird.

Auf der dem Schwenkbolzen 46 gegenüberliegenden Seite weisen die beiden Schenkel 41, 42 des Hebels 40 eine weitere Bohrung 44 auf, die in der Darstellung der Fig. 1 zu erkennen ist. Durch diese Bohrung 44 erstreckt sich der Schwenkbolzen 45, der den Hebel 40 um die Schwenkachse K2 schwenkbeweglich mit der Verriegelungsbaugruppe 10 verbindet. Die Verriegelungsbaugruppe 10 weist an ihrer dem Hebel 40 bzw. dem Montageelement 30 zugewandten Rückseite im oberen Bereich zwei parallel zueinander vorspringende Laschen 2.4, 2.5 auf, die ebenfalls jeweils mit einer sich in horizontaler Richtung erstreckenden Bohrung 2.6 versehen sind. Die Laschen 2.4, 2.5 sind innerhalb der beiden Schenkel 41, 42 des Hebels 40 angeordnet und erstrecken sich parallel zu den beiden Schenkeln 41, 42. Der obere Schwenkbolzen 45 erstreckt sich, im Grunde analog zu dem unteren Schwenkbolzen 46, durch die Bohrungen 44 der beiden Schenkel 41, 42 und auch durch die Bohrungen 2.6 der beiden Laschen 2.4, 2.5.

Bevor nachfolgend die genauere Ausgestaltung und Funktionsweise der Verriegelungsbaugruppe 10 näher beschrieben wird, soll zunächst die grundsätzliche Funktionsweise der Aufstelldachverriegelung 100 erläutert werden. In der Darstellung der Fig. 4d ist die Aufstelldachverriegelung 100 in einer geschnittenen Seitenansicht dargestellt. Zudem ist auch das fahrzeugseitig angeordnete und als Schließbügel ausgestalte Gegenverriegelungselement 20 zu erkennen, welches von dem hakenförmigen Verriegelungselement 1 hintergriffen werden kann. Das Verriegelungselement 1 ist Teil der Verriegelungsbaugruppe 10 und daher in der vorstehend beschriebenen Weise zusammen mit der Verriegelungsbaugruppe 10 über den Hebel 40 mit dem Montageelement 30 um die zwei Schwenkachsen K1, K2 schwenkbar mit dem Aufstelldach 200 verbunden.

Um nun das Aufstelldach 200 zu verriegeln, so dass dieses nicht mehr geöffnet werden kann und gegenüber dem Fahrzeug 300 fixiert ist, muss das Aufstelldach 200 zunächst geschlossen werden. Dafür wird das Aufstelldach 200 nach unten in Richtung des Fahrzeugs 300 bewegt bzw. verschwenkt, bis dieses vergleichsweise locker auf dem Fahrzeug 300 bzw. auf Rahmen 301 aufliegt. Zur Verriegelung wird dann zunächst das Verriegelungselement 1 so positioniert, dass der untere Hakenabschnitt 1.1 des Verriegelungselements 1 das Gegenverriegelungselement 20 hintergreift. Dafür wird die Verriegelungsbaugruppe 10 über den Hebel 40 gegenüber dem relativ zum Aufstelldach 200 feststehenden Montageelement 30 entsprechend positioniert. Die Aufstelldachverriegelung 100 befindet sich dann in einer Stellung gemäß Fig. 2b, in welcher das Gegenverriegelungselement 2 jedoch nicht mit dargestellt ist.

Um das Aufstelldach 200 dann zu verriegeln, muss die Verriegelungsbaugruppe 10 aus dieser Entriegelungsstellung E in die in der Darstellung der Fig. 4c und 4d dargestellte Verriegelungsstellung V bewegt werden. Dabei wird das Verriegelungselement 1 um die durch das Gegenverriegelungselement 20 verlaufende Verriegelungsachse A verschwenkt, die auch in der Darstellung der Fig. 4d verdeutlicht ist. Bei dieser Schwenkbewegung wird der Hebel 40 um die untere Schwenkachse K1 verschwenkt, was dann dazu führt, dass das Montageelement 30 und damit auch das Aufstelldach 200 nach unten bewegt werden. Durch das Überführen der Verriegelungsbaugruppe 10 in die Verriegelungsstellung V wird somit über den Hebel 40 eine nach unten, in Richtung des als Anker dienenden Gegenverriegelungselements 20 gerichtete Spannkraft erzeugt, die das Aufstelldach 200 von oben auf das Fahrzeug 300 bzw. auf den Rahmen 301 spannt. Dabei können sowohl Zeltbahnen als auch eine Dichtung komprimiert werden. Insgesamt fungiert die Aufstelldachverriegelung 100 somit als bzw. nach Art eines Spannverschlusses, über den sich das Aufstelldach 200 mit einer gewissen Kraft gegen das Fahrzeug 300 spannen lässt. Aufgrund der Hebelwirkung können durch ein vergleichsweise leichtgängiges Einschwenken der Verriegelungsbaugruppe 10 in die Verriegelungsstellung V dabei vergleichsweise große Spannkräfte erzeugt werden.

Wenn die Verriegelungsbaugruppe 10 in die Verriegelungsstellung V bewegt wurde, ist diese am oberen Ende mit dem Montageelement 30 verrastet, so dass die Verriegelungsbaugruppe 10 dann nicht ohne Weiteres in entgegengesetzter Richtung wieder ausgeklappt werden kann, um das Aufstelldach 200 wieder zu öffnen. Zudem befindet sich der Hebel 40 in der Verriegelungsstellung V in einer Übertotpunktstellung U, die anhand der Darstellung der Fig. 4d zu erkennen ist. Denn der Hebel 40 ist gemäß der Darstellung der Fig. 4d derart im Uhrzeigersinn verkippt, dass die untere Schwenkachse K1 in horizontaler Richtung näher an der Verriegelungsachse A liegt als die obere Schwenkachse K2. Um die Verriegelungsbaugruppe 10 in die Entriegelungsstellung E zu überführen, ist es erforderlich, den Hebel 40 um die untere Schwenkachse K1 zu verschwenken, wobei die obere Schwenkachse K2 in horizontaler Richtung an der unteren Schwenkachse K1 vorbeigeführt werden muss. Dies führt dazu, dass das Montageelement 30 bzw. das Aufstelldach 200 bei der Entriegelung zunächst noch ein Stück weiter nach unten in Richtung des Fahrzeugs 300 bewegt werden muss. Das heißt, beim Entriegeln müssen die Zeltbahnen und/oder die Dichtung für einen kurzen Moment stärker komprimiert werden als in der Verriegelungsstellung, was zu einer selbsthemmenden Verriegelung führt. Durch diese Ausgestaltung reicht es insofern nicht, die Verriegelungsbaugruppe 10 gegenüber dem Montageelement 30 zu entriegeln, sondern es ist zum Öffnen des Aufstelldaches 200 auch erforderlich, die Verriegelungsbaugruppe 10 mit einer gewissen Kraft um die Verriegelungsachse A zu verschwenken und auszuklappen. Die Übertotpunktstellung U des Hebels 40 in der Verriegelungsstellung sorgt somit dafür, dass die Aufstelldachverriegelung 100 trotz der nach oben wirkenden Kraft der komprimierten Zeltbahnen und/oder Dichtung beim Entriegeln nicht unkontrolliert aufspringt.

Die einzelnen Bestandteile der Verriegelungsbaugruppe 10 sind am besten in der Explosionsansicht der Darstellung der Fig. 1 zu erkennen. Die Verriegelungsbaugruppe 10 besteht neben dem vorstehend bereits beschriebenen Verriegelungselement 1 und den beiden Laschen 2.4, 2.5 noch aus einigen weiteren Teilen, nämlich insbesondere einem Grundelement 2, einem Verriegelungsschieber 3, einer Einstellvorrichtung 4, einem Sicherungselement 5, einem Verriegelungsindikator 6, einer Fixiervorrichtung 8 sowie einer Abdeckung 7.

Bei dem Grundelement 2 handelt es sich zunächst um ein strukturelles Basisteil, welches an seiner dem Hebel 40 zugewandten Seite im oberen Bereich mit den beiden Laschen 2.4, 2.5 versehen ist. Auf der den Laschen 2.4, 2.5 gegenüberliegenden Seite weist das Grundelement 2 eine Führung 2.2 für den Verriegelungsschieber 3 auf. Diese Führung 2.2 fungiert als Linearführung, so dass der Verriegelungsschieber 3 in vertikaler Richtung hoch und runter bewegt werden kann. Der Verriegelungsschieber 3 ist dabei zwischen einer mit dem Rastelement 34 des Montageelements 30 verrasteten Raststellung R und einer Entraststellung S bewegbar. Der Verriegelungsschieber 3 ist dabei über eine Feder 3.5 in die Raststellung R vorgespannt und dann entgegen der Kraft der Feder 3.5 und relativ zu dem Grundelement 2 in die Entraststellung S bewegbar.

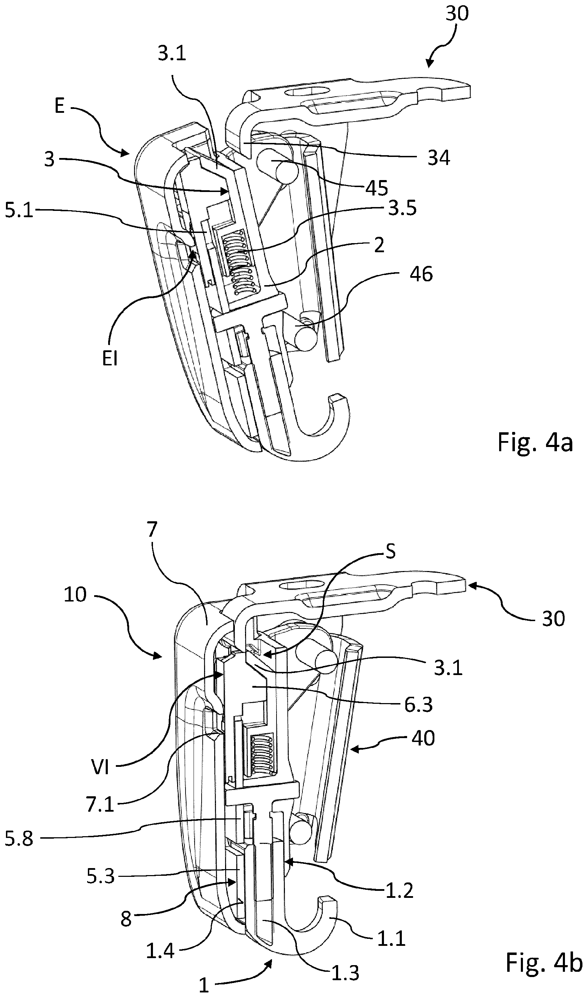

Um das montageelementseitige Rastelement 34 in der Verriegelungsstellung V zu hinterrasten, weist der Verriegelungsschieber 3 ein Gegenrastelement 3.1 auf, welches bspw. auch in den Darstellungen der Fig. 4a und 4b gut zu erkennen ist. Dieses Gegenrastelement 3.1 kann das Rastelement 34 hintergreifen und dann somit dem Verriegelungsschieber 3 und damit auch die Verriegelungsbaugruppe 10 formschlüssig mit dem Montageelement 30 verbinden. Das Gegenrastelement 3.1 ist mit einer Anlaufschräge 3.2 ausgestattet, die von dem Rastelement 34 weggeneigt ist. Entsprechend weist auch das Rastelement 34 am unteren Ende eine als Anlaufschräge fungierende Abschrägung auf, die ebenfalls von dem Gegenrastelement 3.1 weggeneigt ist. Wenn die Verriegelungsbaugruppe 10 nun um die Verriegelungsachse A in die Verriegelungsstellung V verschwenkt wird, kommt das Gegenrastelement 3.1 mit dem Rastelement 34 in Kontakt. Aufgrund der Anlaufschrägen 3.2 wird der Verriegelungsschieber 3 dann entgegen der Kraft der Feder 3.5 nach unten gedrückt. Wenn die Verriegelungsbaugruppe 10 die Verriegelungsstellung V erreicht hat, stehen die beiden Anlaufschrägen 3.2 nicht mehr im Kontakt und der Verriegelungsschieber 3 bzw. das Gegenrastelement 3.1 werden durch die Feder 3.5 wieder nach oben gedrückt und hinterrasten somit das Rastelement 34. Die Verriegelungsbaugruppe 10 kann dann in dieser Raststellung R aus der Verriegelungsstellung V nicht zurück in die Entriegelungsstellung E verschwenkt werden.

Um die Verriegelungsbaugruppe 10 wieder zurück in die Entriegelungsstellung E zu bewegen, muss dann zunächst die Rastverbindung wieder gelöst werden, das heißt, der Verriegelungsschieber 3 muss entgegen der Kraft der Feder 3.5 nach unten gezogen werden, bis dieser das Rastelement 34 nicht mehr hinterrastet. Für diese Bewegung weist der Verriegelungsschieber 3 zwei seitlich angeordnete Handhabungsbereiche 3.3 auf, die in der Darstellung der Fig. 3 gut zu erkennen sind. Diese Handhabungsbereiche 3.3 sind mit einem nach unten gerichteten Pfeil gekennzeichnet, der insofern die zur Entrastung erforderliche Bewegungsrichtung anzeigt. Konkret kann eine Person mit dem Daumen und dem Zeigefinger einer Hand jeweils einen der beiden Handhabungsbereiche 3.3 kontaktieren und dann den Verriegelungsschieber 3 nach unten ziehen.

Um den Verriegelungsschieber 3 zuverlässig mit dem Grundelement 2 zu verbinden bzw. um diesem am Grundelement 2 zu lagern, ist ein im Wesentlichen plattenförmig ausgestaltetes Sicherungselement 5 vorgesehen, welches in der Explosionsdarstellung der Fig. 1 aber auch in der Darstellung der Fig. 3 zu erkennen ist. Das Grundelement 2 weist im Bereich der Führung 2.2 zwei vorspringende und parallel zueinander angeordnete Dome 2.3 auf, die sich durch den Verriegelungsschieber 3 hindurcherstrecken. Der Verriegelungsschieber 3 weist dafür zwei korrespondierend ausgestaltete Ausnehmungen 3.4 auf, durch die sich die Dome 2.3 hindurcherstrecken. Die Dome 2.3 haben dabei nicht nur eine Führungsfunktion, sondern sie Begrenzen auch die vertikale Bewegbarkeit des Verriegelungsschiebers 3 und fungieren insofern auch als Anschläge. Endseitig sind die Dome 2.3 mit dem Sicherungselement 5 verbunden, so dass der Verriegelungsschieber 3 zwischen dem Sicherungselement 5 und dem Grundelement 2 linearbeweglich gelagert ist. Das Sicherungselement 5 weist zur Aufnahme der Dome 2.3 im oberen Bereich zwei Bohrungen 5.5 auf, die eine Verbindung mit den Domen 2.3 ermöglichen. In unteren Bereich weist das Sicherungselement 5 ebenfalls zwei Bohrungen 5.5 auf, so wie dies anhand der Darstellung der Fig. 1 und 3 zu erkennen ist. Die rechte Bohrung 5.5 fungiert dabei als weiterer Verbindungspunkt mit dem Grundelement 2 und die rechte Bohrung 5.5 dient zur Aufnahme der Fixierschraube 5.6, deren Funktion nachfolgend noch näher erläutert wird.

Unterhalb des Entriegelungsschiebers 3 ist das Verriegelungselement 1 im bzw. am Grundelement 2 gelagert. Auch das Verriegelungselement 1 ist dabei nicht fest mit dem Grundelement 2 verbunden, sondern dieses ist über eine Einstellvorrichtung 4 in vertikaler Richtung bewegbar, um somit die Verriegelungsposition des Aufstelldaches 200 einstellen zu können. Durch diese Einstellbarkeit kann der Druck bzw. die Spannkraft eingestellt werden, mit der das Aufstelldach 200 in der Verriegelungsstellung V auf das Fahrzeug 300 aufgespannt wird. Denn durch eine Bewegung lässt sich der Abstand zwischen dem Montageelement 30 und damit auch des Aufstelldachs 200 und dem Gegenverriegelungselement 20 in der Verriegelungsstellung V einstellen, so wie man sich dies bspw. auch anhand der Darstellung der Fig. 4d vorstellen kann. Insofern lässt sich über die Einstellvorrichtung 4 auch die Kompression der Zeltbahnen und/oder der Dichtung einstellen und auch Fertigungs- oder Montagetoleranzen lassen sich ausgleichen.

Um eine entsprechende Einstellbewegung des Verriegelungselements 1 zu ermöglichen, weist dieses einen Führungsabschnitt 1.2 auf, über den das Verriegelungselement 1 in einer entsprechend zum Führungsabschnitt 1.2 korrespondierend ausgestalteten Führung 2.1 des Grundelements 2 linearbeweglich gelagert ist. Die Einstellvorrichtung 4 ist dabei als Einstellschraube ausgestaltet und diese weist einen Schraubenkopf 4.1 und einen mit einem Außengewinde versehenen Schaftabschnitt 4.2 auf, der in eine mit einem Innengewinde versehenden Bohrung 1.3 des Verriegelungselements 1 eingeschraubt ist. Die Einstellschraube ist dabei in axialer Richtung fixiert, so dass diese zwar gedreht werden kann, jedoch translatorisch keine Bewegung möglich ist. Da das Verriegelungselement 1 aufgrund der Führung 2.1 hingegen nicht drehbar, sondern nur in vertikaler Richtung hoch und runter bewegbar ist, führt eine Drehbewegung des Schraubenkopfes 4.1 entsprechend zu einer vertikalen Bewegung des Verriegelungselements 1 und damit auch des Hakenabschnitts 1.1. Um eine axiale bzw. eine horizontale Bewegung des Schaftabschnitts 4.2 bzw. der Einstellvorrichtung 4 insgesamt zu verhindern, ist der Schraubenkopf 4.1 axial eingespannt, was bspw. anhand der Schnittansicht der Fig. 4c ersichtlich ist.

Das Sicherungselement 5 weist dafür eine schlitzförmige Ausnehmung 5.2 und das Grundelement weist ebenfalls eine schlitzförmige Ausnehmung 2.7 auf. Die beiden Ausnehmungen 5.2, 2.7 liegen dabei in einer Ebene und der Schraubenkopf 4.1 erstreckt sich abschnittsweise in beide Ausnehmungen 5.2, 2.7 hinein. So wie dies weiterhin bspw. anhand der Darstellung der Fig. 4c oder der Fig. 2a ersichtlich ist, ragt der Schraubenkopf 4.1 über die Ausnehmung 2.7 des Grundelements 2 hinaus, so dass der Schraubenkopf 4.1 per Hand von der entsprechenden Rückseite der Verriegelungsbaugruppe 10 erreicht und gedreht werden kann. In der Darstellung der Fig. 2a sind dahingehend auch zwei Pfeile zu erkennen, die signalisieren, dass das Verriegelungselement 1 über eine Drehbewegung des Schraubenkopfes 4.1 zur Einstellung der Verriegelungsposition des Aufstelldaches 200 hoch und runter bewegt werden kann. Um die Einstellung etwas zu erleichtern, ist der Schraubenkopf 4.1 umfangsseitig gerändelt, was ebenfalls anhand der Darstellung der Fig. 2a gut zu erkennen ist.

Wie man sich dies leicht vorstellen kann, kann es aufgrund von Erschütterungen bei der Fahrt, aufgrund einer vergleichsweise hohen Spannkraft oder auch aufgrund von Verschleißerscheinungen dazu kommen, dass sich das Verriegelungselement 1, insbesondere bei einer längeren Verwendung der Aufstelldachverriegelung 100, unbeabsichtigt bewegt und verstellt. Um eine ständige Nachjustierung zu verhindern, ist eine Fixiervorrichtung 8 vorgesehen, über die sich die mittels der Einstellvorrichtung 4 eingestellte Position des Verriegelungselements 1 fixieren lässt. Eine Bewegung und Einstellung des Verriegelungselements 1 ist dann erst wieder möglich, wenn die Fixiervorrichtung 8 gelöst wurde.

Die Fixiervorrichtung 8 wird im Wesentlichen durch den unteren Teil des Sicherungselements 5 gebildet, der als Fixierungsabschnitt 5.3 ausgebildet und bspw. in der Darstellung der Fig. 3 zu erkennen ist. Das Sicherungselement 5 ist insofern zweigeteilt und dieses weist im unteren Teil einen Fixierungsabschnitt 5.3 und darüberliegend einen Grundabschnitt 5.8 auf, der in der vorstehend beschriebenen Weise die Ausnehmung 5.2 aufweist und der den Verriegelungsschieber 3 am Grundelement 2 sichert. Der Fixierungsabschnitt 5.3 ist über einen Schlitz 5.4 gegenüber dem Grundabschnitt 5.8 abgetrennt, der eine gewisse elastische Bewegung des Fixierungsabschnitts 5.3 erlaubt. Wie vorstehend bereits erläutert, ist der Fixierungsabschnitt gemäß der Darstellung in der Fig. 3 im linken Bereich fest mit dem Grundelement 2 verbunden. Im rechten Bereich unterhalb des Schlitzes 5.4 ist der Fixierungsabschnitt 5.3 jedoch nicht fest mit dem Grundelement 2 verbunden, sondern es ist eine Fixierschraube 5.6 vorgesehen, die sich durch das Grundelement 2 hindurcherstreckt und die von hinten in die untere rechte Bohrung des Sicherungselements 5 bzw. des Fixierungsabschnitts 5.3 eingeschraubt ist.

Auf der in der Darstellung der Fig. 3 nicht zu erkennenden Rückseite des Fixierungsabschnitts 5.3 liegt dieser an dem Verriegelungselement 1 bzw. an dem Führungsabschnitt 1.2 des Verriegelungselements 1 an. Die dem Sicherungselement 5 zugewandte Seite des Verriegelungselements 1 bzw. des Führungsabschnitts 1.2 ist als Spannfläche 1.4 ausgestaltet, die in der Darstellung der Fig. 4c zu erkennen ist. Über die Fixierschraube 5.6 kann nun der Fixierungsabschnitt 5.3 in Richtung des Grundelements 2 bewegt und dabei auf die Spannfläche 1.4 des Verriegelungselements 1 gezogen werden. Der Fixierungsabschnitt 5.3 wird dabei gegenüber dem Grundabschnitt 5.8 des Sicherungselements 5 elastisch in geringem Umfang verformt, so dass der Fixierungsabschnitt 5.3 bei einem Lösen der Fixierschraube 5.6 aufgrund der Materialeigenspannung wieder in seine Ausgangsposition zurückkehrt. Wenn der Fixierungsabschnitt 5.3 somit gegen das Verriegelungselement 1 gespannt ist, liegt dieser nicht mehr exakt in einer Ebene mit dem Grundabschnitt 5.8, wobei diese Abweichung in der Praxis aber sehr gering ausfallen kann. Wird die Fixierschraube 5.6 wieder gelöst kehrt der Fixierungsabschnitt 5.3 elastisch wieder in seine Ursprungsposition zurück und liegt dann auch wieder in einer Ebene mit dem Grundabschnitt 5.8.

Über die Fixierschraube 5.6 kann somit die zwischen dem Fixierungsabschnitt 5.3 und der Spannfläche 1.4 wirkende Reibkraft eingestellt werden. Wenn die Fixierschraube 5.6 festgezogen und der Fixierungsabschnitt 5.3 somit gegen die Spannfläche 1.4 gespannt wird, ist das Verriegelungselement 1 nicht mehr bewegbar. Entsprechend ist dann auch die Einstellvorrichtung 4 bzw. der Schraubenkopf 4.1 nicht mehr per Hand drehbar. In der Praxis kann somit zunächst die Position des Verriegelungselements 1 in Abhängigkeit der erforderlichen Verriegelungsposition des Aufstelldachs 200 eingestellt werden und diese Einstellung bzw. diese Position des Verriegelungselements 1 kann dann über die Fixiervorrichtung 8 bzw. über den Fixierungsabschnitt 5.3 fixiert werden.

Da beim Verriegeln der Aufstelldachverriegelung 100 bzw. der Verriegelungsbaugruppe 10 der Verriegelungszustand von außen nicht ohne Weiteres ersichtlich ist und insofern die Gefahr besteht, dass die Verriegelungsbaugruppe 10 zwar in Richtung der Verriegelungsstellung V verschwenkt wird, der Verriegelungsschieber 3, das Rastelement 34 jedoch noch nicht zuverlässig hinterrastet hat, ist der insbesondere in der Darstellung der Fig. 1 und 3 zu erkennende Verriegelungsindikator 6 vorgesehen. Dieser ist zwischen zwei Stellungen, nämlich einer Entriegelungsindikationsstellung EI und einer Verriegelungsindikationsstellung VI in linearer Richtung hin- und herbewegbar. Der Verriegelungsindikator 6 weist auf seiner Vorderseite zwei übereinander angeordnete Indikatorflächen 6.1, 6.2 auf, wobei die erste Indikatorfläche 6.1 zur Indikation einer korrekten Verrastung durch ein Symbol eines geschlossenen Vorhängeschlosses und die zweite Indikatorfläche zur Indikation einer nicht korrekten Verrastung bzw. einer Entrastung ein Symbol eines offenen Vorhängeschlosses aufweist.

Die zur Abdeckung, insbesondere des Sicherungselements 5 und des Verriegelungsschiebers 3, dienende Abdeckung 7 weist eine Sichtöffnung 7.1 auf, die in etwa die Größe einer Indikatorfläche 6.1, 6.2 aufweist. Die Abdeckung 7 ist feststehend angeordnet, so dass bei einer Bewegung des Verriegelungsindikators 6 durch die Sichtöffnung 7.1 entweder die erste Indikatorfläche 6.1 oder die zweite Indikatorfläche 6.2 sichtbar wird und somit der Verrast- bzw. Verriegelungszustand auf möglichst einfache Weise erkannt werden kann.

Die Funktionsweise des Verriegelungsindikators 6 wird beispielsweise anhand der Darstellung der Fig.4a und 4c ersichtlich. In der Darstellung der Fig. 4a befindet sich der Verriegelungsindikator 6 zunächst in der Entriegelungsindikationsstellung EI und die untere, zweite Indikatorfläche 6.2 ist über die Sichtöffnung 7.1 zu erkennen. Dies geht damit einher, dass der Verriegelungsindikator 6 über eine Feder 6.4 nach oben, in die Entriegelungsindikationsstellung EI vorgespannt ist. Die Feder 6.4 ist in der Darstellung der Fig. 3 gut zu erkennen und diese ist in einem Montageabschnitt 5.7 am Ende der schlitzförmigen Ausnehmung 5.2 für den Schraubenkopf 4.1 angeordnet. Damit die Verriegelungsbaugruppe 10 vergleichsweise flachbauend ausgestaltet sein kann, ist die Feder 6.4 als Drehschenkelfeder ausgestaltet, deren einer Schenkel von unten gegen den Verriegelungsindikator 6 drückt und deren anderer Schenkel mit dem Sicherungselement 5 gekoppelt ist.

Wird die Verriegelungsbaugruppe 10 nun in die Verriegelungsstellung V bewegt, wird zunächst das Gegenrastelement 3.1 entgegen der Feder 3.5 nach unten in die Entraststellung S bewegt. Da der Verriegelungsindikator 6 eine in den Verriegelungsschieber 3 hineinreichende und als Mitnahmekontur ausgestaltete Kontur 6.3 aufweist, wird der Verriegelungsindikator 6 von dem Verriegelungsschieber 3 mitgenommen und zusammen mit diesem nach unten bewegt. Der Verriegelungsindikator 6 befindet sich dann in der Verriegelungsindikationsstellung VI und die erste Indikatorfläche 6.2 ist durch die Sichtöffnung 7.1 zu erkennen.

Wenn die Verriegelungsbaugruppe 10 dann so weit eingeschwenkt wurde, dass das Gegenrastelement 3.1 das Rastelement 34 hintergreifen kann, kontaktiert das Rastelement 34 den Verriegelungsindikator 6. Das Rastelement 34 liegt dann oberhalb des Verriegelungsindikators 6 und verhindert, dass dieser getrieben von der Feder 6.4 zurück in die Entriegelungsindikationsstellung E bewegt wird. Diese Stellung ist in der Darstellung der Fig. 4c zu erkennen. Wenn die Rastverbindung in der vorstehend beschriebenen Weise durch eine Bewegung des Verriegelungsschiebers 3 nach unten wieder gelöst wird, hat dies keinen Einfluss auf den Verriegelungsindikator 6, sondern der Verriegelungsschieber 3 wird dann relativ zu dem Verriegelungsindikator 6 nach unten in die Entraststellung S bewegt. Wenn dann in einem nächsten Schritt die Verriegelungsbaugruppe 10 um die Verriegelungsachse A ausgeschwenkt wird, wird der Verriegelungsindikator 6 zunächst so lange noch durch den Verriegelungsschieber 3 in der Verriegelungsindikationsstellung VI gehalten, bis der Verriegelungsschieber 3 losgelassen wird. Der Verriegelungsschieber 3 und der Verriegelungsindikator 6 werden dann durch die jeweiligen Federn 3.5, 6.4 nach oben gedrückt.

Um eine zuverlässige lineare Hoch- und Runterbewegung des Verriegelungsindikators 6 zu gewährleisten, ist der Verriegelungsindikator 6 an dem Sicherungselement 5 beweglich gelagert. Das Sicherungselement 5 weist im oberen Bereich, also im Bereich des Grundabschnitts 5.8, einen sich in vertikaler Richtung erstreckenden Schlitz auf, der als Führung 5.1 fungiert. Der Verriegelungsindikator 6 erstreckt sich zumindest abschnittsweise durch das Sicherungselement 5 bzw. durch die Führung 5.1 hindurch und ist daher lediglich in vertikaler Richtung zwischen der Entriegelungsindikationsstellung EI und der Verriegelungsindikationsstellung VI bewegbar. Die Kontur 6.3 und die Indikatorflächen 6.1, 6.2 liegen sich daher im Hinblick auf das Sicherungselement 5 gegenüber.

Insgesamt erlaubt die Aufstelldachverriegelung 100 eine zuverlässige Verriegelung des Aufstelldachs 200 und durch den Hebel 40 und die Wirkung als Spannverschluss kann das Aufstelldach 200 in der geschlossenen Position über die Aufstelldachverriegelung 100 mit einer gewissen Spannkraft nach unten auf das Fahrzeugdach gezogen werden. Die Einstellvorrichtung 4 ermöglicht dabei eine Anpassung der Spannkraft und darüber auch einen Ausgleich von Fertigung- und Montagetoleranzen sowie einen Ausgleich von Temperatureinflüssen. Über den Verriegelungsindikator 6 kann der Verriegelungszustand des Aufstelldachs 200 bzw. der Aufstelldachverriegelung 100 sehr einfach erkannt werden, so dass im Falle einer nicht korrekten Verrastung entsprechend nachgebessert werden kann.

### Bezugszeichen:

- 1: Verriegelungselement
- 1.1: Hakenabschnitt
- 1.2: Führungsabschnitt
- 1.3: Bohrung
- 1.4: Spannfläche
- 2: Grundelement
- 2.1: Führung
- 2.2: Führung
- 2.3: Dom
- 2.4: Lasche
- 2.5: Lasche
- 2.6: Bohrung
- 2.7: Ausnehmung
- 3: Verriegelungsschieber
- 3.1: Gegenrastelement
- 3.2: Anlaufschräge
- 3.3: Handhabungsbereich
- 3.4: Ausnehmung
- 3.5: Feder
- 4: Einstellvorrichtung
- 4.1: Schraubenkopf
- 4.2: Schaftabschnitt
- 5: Sicherungselement
- 5.1: Führung
- 5.2: Ausnehmung
- 5.3: Fixierungsabschnitt
- 5.4: Schlitz
- 5.5: Bohrung
- 5.6: Fixierschraube
- 5.7: Montageabschnitt
- 5.8: Grundabschnitt
- 6: Verriegelungsindikator
- 6.1: erste Indikatorfläche
- 6.2: erste Indikatorfläche
- 6.3: Kontur
- 6.4: Feder
- 7: Abdeckung
- 7.1: Sichtöffnung
- 8: Fixiervorrichtung
- 10: Verriegelungsbaugruppe
- 20: Gegenverriegelungselement
- 30: Montageelement
- 31: Schenkel
- 32: Schenkel
- 33: Montageabschnitt
- 34: Rastelement
- 35: Bohrung
- 36: Anschlag
- 40: Hebel
- 41: Schenkel
- 42: Schenkel
- 43: Verbindungsbereich
- 44: Bohrung
- 45: Schwenkbolzen
- 46: Schwenkbolzen
- 100: Aufstelldachverriegelung
- 200: Aufstelldach
- 300: Fahrzeug
- 301: Rahmen
- A: Verriegelungsachse
- E: Entriegelungsstellung
- V: Verriegelungsstellung
- R: Raststellung
- S: Entraststellung
- U: Übertotpunktstellung
- EI: Entriegelungsindikationsstellung
- VI: Verriegelungsindikationsstellung
- K1: erste Schwenkachse
- K2: zweite Schwenkachse

## Patentansprüche

1. Aufstelldachverriegelung zur Verriegelung eines Aufstelldaches (200) in dessen geschlossener Position gegenüber einem Fahrzeug (300) mit einem Montageelement (30) zur Montage an dem Aufstelldach (200) oder dem Fahrzeug (30), einer mit dem Montageelement (30) gekoppelten und ein Verriegelungselement (1) aufweisenden Verriegelungsbaugruppe (10) und einem Gegenverriegelungselement (20), welches von dem Verriegelungselement (1) zur Verriegelung des Aufstelldaches (200) hintergreifbar ist,
**dadurch gekennzeichnet,**
**dass** die Verriegelungsbaugruppe (10) über einen Hebel (40) mit dem Montageelement (30) gekoppelt ist, wobei der Hebel (40) zur Bildung eines Spannverschlusses sowohl gelenkig mit der Verriegelungsbaugruppe (10) als auch mit dem Montageelement (30) verbunden ist.

2. Aufstelldachverriegelung nach Anspruch 1, **dadurch gekennzeichnet, dass** die Verriegelungsbaugruppe (10) zwischen einer Verriegelungsstellung (V) und einer Entriegelungsstellung (E) bewegbar ist, wobei das Aufstelldach (200) in der Verriegelungsstellung (V) gegenüber dem Fahrzeug (300) verriegelt ist.

3. Aufstelldachverriegelung nach einem der vorhergehenden Ansprüche, **dadurch gekennzeichnet, dass** das Verriegelungselement (1) in der das Gegenverriegelungselement (20) hintergreifenden Stellung gegenüber dem Gegenverriegelungselement (20) um eine Verriegelungsachse (A) schwenkbar angeordnet ist.

4. Aufstelldachverriegelung nach Anspruch 3, **dadurch gekennzeichnet, dass** die Verriegelungsbaugruppe (10) um die Verriegelungsachse (A) in die Verriegelungsstellung (V) schwenkbar ist, wobei bei dieser Bewegung das Montageelement (30) in Richtung des Gegenverriegelungselement (20) bewegt wird.

5. Aufstelldachverriegelung nach einem der vorhergehenden Ansprüche, **dadurch gekennzeichnet, dass** die Verriegelungsbaugruppe (10) zur Verriegelung des Aufstelldaches (200) mit dem Montageelement (30) verrastbar ist.

6. Aufstelldachverriegelung nach Anspruch 5, **dadurch gekennzeichnet, dass** die Verriegelungsbaugruppe (10) zur Verrastung mit dem Montageelement (30) einen Verriegelungsscheiber (3) aufweist.

7. Aufstelldachverriegelung nach Anspruch 6, **dadurch gekennzeichnet, dass** der Verriegelungsschieber (3) zur Lösung der Rastverbindung mit dem Montageelement (30) zumindest einen Handhabungsbereich (3.3) zur manuellen Bewegung des Verriegelungsschiebers (3) aufweist.

8. Aufstelldachverriegelung nach einem der vorhergehenden Ansprüche, **dadurch gekennzeichnet, dass** der Hebel (40) in der Verriegelungsstellung (V) in einer Übertotpunktstellung (U) angeordnet ist.

9. Aufstelldachverriegelung nach einem der vorhergehenden Ansprüche oder nach dem Oberbegriff des Anspruchs 1, **dadurch gekennzeichnet, dass** das Verriegelungselement (1) zur Einstellung der Verriegelungsposition des Aufstelldachs (200) bewegbar ist.

10. Aufstelldachverriegelung nach Anspruch 9, **gekennzeichnet durch** eine Einstellvorrichtung (4) zur manuellen Bewegung des Verriegelungselements (1).

11. Aufstelldachverriegelung nach einem der vorhergehenden Ansprüche, **dadurch gekennzeichnet, dass** das Verriegelungselement (1) über eine Fixiervorrichtung (8) fixierbar ist, wobei die Fixiervorrichtung (8) von einem Fixierungsabschnitt (5.3) eines Sicherungselements (5) gebildet wird, der zur Fixierung des Verriegelungselements (1) gegen das Verriegelungselement (1) spannbar ist.

12. Aufstelldachverriegelung nach Anspruch 11, **dadurch gekennzeichnet, dass** der Fixierungsabschnitt (5.3) zur Spannung gegen das Verriegelungselement (1) elastisch verformbar ist.

13. Aufstelldachverriegelung nach einem der vorhergehenden Ansprüche oder nach dem Oberbegriff des Anspruchs 1, **gekennzeichnet durch** einen Verriegelungsindikator (6) zur Anzeige des Verriegelungsstatus der Aufstelldachverriegelung (10).

14. Aufstelldachverriegelung nach Anspruch 13, **dadurch gekennzeichnet, dass** der Verriegelungsindikator (6) in eine Entriegelungsindikationsstellung (EI) vorgespannt ist und ein Rastelement (34) des Montageelements (30) den Verriegelungsindikator (6) bei der Überführung der Verriegelungsbaugruppe (10) in die Verriegelungsstellung (V) in die Verriegelungsindikationsstellung (VI) überführt.

15. Fahrzeug mit einem Aufstelldach (200) und mindestens einer Aufstelldachverriegelung (100) nach einem der vorhergehenden Ansprüche, **dadurch gekennzeichnet, dass** entweder das Verriegelungselement (1) oder das Gegenverriegelungselement (20) aufstelldachseitig angeordnet ist.
